# EUROPEAN PATENT SPECIFICATION

(11) **EP 4 317 596 B1**
(45) Date of publication and mention of the grant of the patent: **04.02.2026**
(21) Application number: 22780878.9
(22) Date of filing: 29.03.2022
(51) Int. Cl.: E02F 3/43, E02F 9/22

(54) **EXCAVATOR AND EXCAVATOR CONTROL DEVICE**
BAGGER UND BAGGERSTEUERUNGSVORRICHTUNG
EXCAVATRICE ET DISPOSITIF DE COMMANDE D'EXCAVATRICE

(30) Priority: 31.03.2021 JP 2021060298
(43) Date of publication of application: 07.02.2024
(73) Proprietor: Sumitomo Heavy Industries, Ltd., Tokyo 141-6025 (JP)
(72) Inventor: SANO, Yusuke, Yokosuka-shi, Kanagawa 237-8555 (JP); HONDA, Keiji, Yokosuka-shi, Kanagawa 237-8555 (JP); ONODERA, Masaru, Yokosuka-shi, Kanagawa 237-8555 (JP)
(74) Representative: Louis Pöhlau Lohrentz
(86) International application number: PCT/JP2022/015331
(87) International publication number: WO 2022/210667

(56) References cited:
- WO-A1-2019/112059
- WO-A1-2019/176075
- WO-A1-2020/196896
- JP-A- 2013 217 138
- JP-A- 2014 098 270
- JP-A- 2018 003 386
- JP-A- 2018 003 514
- JP-A- 2019 052 515
- JP-A- 2020 122 380

## Description

### [Technical Field]

The present disclosure relates to shovels and control devices for shovels.

### [Background Art]

Shovels that display the following on a display device have hitherto been known: a projection line of a normal to a target surface (surface to be excavated) that is one of a plurality of constituting surfaces that constitute a three-dimensional terrain model of a target terrain (target construction surface); and a direction in which attachments move (see PTL 1, PTL 2).

### [CITATION LIST]

### [PATENT LITERATURE]

[PTL 1] Japanese Laid-Open Patent Publication No. 2004-107926
PTL 2 JP 2018 003514 A

### [SUMMARY OF INVENTION]

### [TECHNICAL PROBLEM]

However, in the case of the above shovels, operators of the shovels need to manually select the target surface using a setting device. This configuration may complicate operation by the operators when the operators cause the shovels to face the target surface straight.

In view thereof, it is desirable to provide a shovel that can more simplify the operation by the operator when the operator causes the shovel to face the target surface straight (straight facing target surface).

### [SOLUTION TO PROBLEM]

A shovel according to an embodiment of the present disclosure includes: a lower traveling body; an upper swiveling body mounted to the lower traveling body; attachments including a boom attached to the upper swiveling body, an arm attached to an end of the boom, and an end attachment attached to an end of the arm; and a control device configured to select, as a straight facing target surface, a target construction surface according to claim 1.

### [Advantageous Effects of Invention]

By the above-described means, a shovel that can more simplify the operation by the operator when the operator causes the shovel to face the straight facing target surface straight is provided.

### [Brief Description of Drawings]

[FIG. 1] FIG. 1 is a side view of a shovel according to an embodiment of the present disclosure.
[FIG. 2] FIG. 2 is a block diagram illustrating a configuration example of a driving system of the shovel of FIG. 1.
[FIG. 3] FIG. 3 is a schematic view illustrating a configuration example of a hydraulic system mounted to the shovel of FIG. 1.
[FIG. 4A] FIG. 4A is a view of a part of a hydraulic system in relation to operation of an arm cylinder.
[FIG. 4B] FIG. 4B is a view of a part of a hydraulic system in relation to operation of a boom cylinder.
[FIG. 4C] FIG. 4C is a view of a part of a hydraulic system in relation to operation of a bucket cylinder.
[FIG. 4D] FIG. 4D is a view of a part of a hydraulic system in relation to operation of a swiveling hydraulic motor.
[FIG. 5A] FIG. 5A is a view of a part of a hydraulic system in relation to operation of a left traveling hydraulic motor.
[FIG. 5B] FIG. 5B is a view of a part of a hydraulic system in relation to operation of a right traveling hydraulic motor.
[FIG. 6] FIG. 6 is a block diagram illustrating another configuration example of the driving system of the shovel of FIG. 1.
[FIG. 7] FIG. 7 is a flowchart of a straight facing process.
[FIG. 8A] FIG. 8A is a top view of the shovel upon performing the straight facing process.
[FIG. 8B] FIG. 8B is a top view of the shovel upon performing the straight facing process.
[FIG. 9A] FIG. 9A is a perspective view of the shovel upon performing the straight facing process.
[FIG. 9B] FIG. 9B is a perspective view of the shovel upon performing the straight facing process.
[FIG. 10A] FIG. 10A is a perspective view of a target construction surface upon performing a straight facing target surface selection process.
[FIG. 10B] FIG. 10B is a perspective view of the target construction surface upon performing the straight facing target surface selection process.
[FIG. 11] FIG. 11 is a perspective view of the target construction surface upon performing the straight facing target surface selection process.

### [Description of Embodiments]

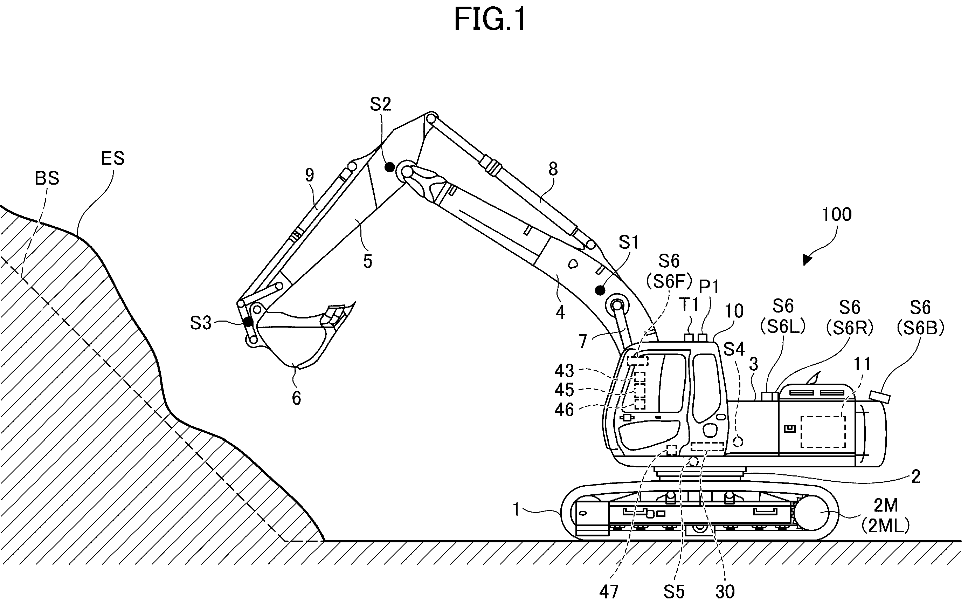

FIG. 1 is a side view of a shovel 100, which is an excavator, according to an embodiment of the present disclosure. An upper swiveling body 3 is mounted via a swiveling mechanism 2 to a lower traveling body 1 of the shovel 100. A boom 4 is attached to the upper swiveling body 3. An arm 5 is attached to an end of the boom 4, and a bucket 6, which is an end attachment, is attached to an end of the arm 5. The bucket 6 may be a slope bucket.

The boom 4, the arm 5, and the bucket 6 form an excavating attachment, which is an example of the attachment. The boom 4 is driven by a boom cylinder 7, the arm 5 is driven by an arm cylinder 8, and the bucket 6 is driven by a bucket cylinder 9. A boom angle sensor S1 is attached to the boom 4, an arm angle sensor S2 is attached to the arm 5, and a bucket angle sensor S3 is attached to the bucket 6.

The boom angle sensor S1 is configured to detect a rotation angle of the boom 4. In the present embodiment, the boom angle sensor S1 is an acceleration sensor, and can detect the rotation angle of the boom 4 with respect to the upper swiveling body 3 (hereinafter referred to as a "boom angle"). The boom angle is, for example, the minimum angle when the boom 4 is moved down at the lowest position, and the boom angle increases as the boom 4 is raised.

The arm angle sensor S2 is configured to detect a rotation angle of the arm 5. In the present embodiment, the arm angle sensor S2 is an acceleration sensor, and can detect the rotation angle of the arm 5 with respect to the boom 4 (hereinafter referred to as an "arm angle"). The arm angle is, for example, the minimum angle when the arm 5 is closed at most, and the arm angle increases as the arm 5 is opened.

The bucket angle sensor S3 is configured to detect a rotation angle of the bucket 6. In the present embodiment, the bucket angle sensor S3 is an acceleration sensor, and can detect the rotation angle of the bucket 6 with respect to the arm 5 (hereinafter referred to as a "bucket angle"). The bucket angle is, for example, the minimum angle when the bucket 6 is closed at most, and the bucket angle increases as the bucket 6 is opened.

The boom angle sensor S1, the arm angle sensor S2, and the bucket angle sensor S3 may each be a potentiometer using a variable resistor, a stroke sensor that detects a stroke amount of a corresponding hydraulic cylinder, a rotary encoder that detects the rotation angle about a coupling pin, a gyro sensor, or a combination of an acceleration sensor and a gyro sensor.

A cab 10, which is an operation room, is provided in the upper swiveling body 3 and a power source such as an engine 11 is mounted to the upper swiveling body 3. A controller 30, a sound output device 43, a display device 45, an input device 46, a storage device 47, a machine body tilt sensor S4, a swivel angular velocity sensor S5, a camera S6, a communication device T1, a position measurement device P1, and the like are attached to the upper swiveling body 3.

The controller 30 is configured to function as a main control part for drive control of the shovel 100. In the present embodiment, the controller 30 is formed by a computer including, for example, a CPU, a RAM, and a ROM. Various functions of the controller 30 are achieved by, for example, the CPU executing a program stored in the ROM. The various functions include, for example, a machine guidance function that guides the operator to perform a manual operation of the shovel 100 and a machine control function that automatically assists the operator to perform the manual operation of the shovel 100. A machine control device 50 included in the controller 30 is configured to perform the machine guidance function and the machine control function.

The display device 45 is configured to display various information. The display device 45 may be connected to the controller 30 through a communication network such as CAN or may be connected to the controller 30 through a private network.

The input device 46 is configured to enable the operator to input various information to the controller 30. The input device 46 includes, for example, a touch panel, a knob switch, and a membrane switch that are mounted to the cab 10.

The sound output device 43 is configured to output a sound. The sound output device 43 may be, for example, an on-board speaker connected to the controller 30 or an alarm such as a buzzer. According to the present embodiment, the sound output device 43 is configured to output the sound indicating various information in response to a sound output command from the controller 30.

The storage device 47 is configured to store various information. The storage device 47 is, for example, a non-volatile storage medium, such as a semiconductor memory. The storage device 47 may store information output by various devices during operation of the shovel 100 or may store information obtained through various devices before the operation of the shovel 100 is started. For example, the storage device 47 may store information related to the target construction surface obtained through a communication device T1 or the like. The target construction surface may be set by the operator of the shovel 100 or may be set by a construction manager or the like.

The machine body tilt sensor S4 is configured to detect the tilt of the upper swiveling body 3 with respect to a virtual horizontal plane. In the present embodiment, the machine body tilt sensor S4 is an acceleration sensor that detects the tilting angle about the front-back axis of the upper swiveling body 3 and the tilting angle about the left-right axis of the upper swiveling body 3. The front-back axis and the left-right axis of the upper swiveling body 3 are orthogonal to each other at the center point of the shovel, which is a point on the swiveling axis of the shovel 100, for example.

The swivel angular velocity sensor S5 is configured to detect the swiveling angular velocity of the upper swiveling body 3. The swivel angular velocity sensor S5 may be configured to detect or calculate the swiveling angle of the upper swiveling body 3. In the present embodiment, the swivel angular velocity sensor S5 is a gyro sensor. The swivel angular velocity sensor S5 may be a resolver, a rotary encoder, or the like.

The camera S6 is an example of a space recognition device and is configured to obtain an image around the shovel 100. In the present embodiment, the camera S6 includes a front camera S6F that images a space in front of the shovel 100, a left camera S6L that images a space on the left of the shovel 100, a right camera S6R that images a space on the right of the shovel 100, and a back camera S6B that images a space at the back of the shovel 100.

The camera S6 is, for example, a monocular camera having an imaging element such as a CCD or CMOS, and outputs a taken image to the display device 45. The camera S6 may be a stereo camera, a distance image camera, or the like. Also, the camera S6 may be replaced by another space recognition device, such as an ultrasonic sensor, a millimeter wave radar, a LIDAR sensor, or an infrared sensor, or may be replaced by a combination of another space recognition device and a camera.

The front camera S6F is attached to, for example, the ceiling of the cab 10, that is, inside the cab 10. However, the front camera S6F may be attached to the roof of the cab 10, that is, outside the cab 10. The left camera S6L is attached to a left end of the upper surface of the upper swiveling body 3, the right camera S6R is attached to a right end of the upper surface of the upper swiveling body 3, and the back camera S6B is attached to a back end of the upper surface of the upper swiveling body 3.

The communication device T1 controls communication with an external device outside the shovel 100. In the present embodiment, the communication device T1 controls communication with an external device through a satellite communication network, a cellular phone communication network, the Internet, or the like. The external device may be, for example, a management device such as a server installed in an external facility or an assistant device such as a smartphone carried by a worker around the shovel 100. The external device is, for example, configured to manage construction information about one or more shovels 100. The construction information includes, for example, information related to operation time, fuel consumption, workload, and the like of the shovel 100. The workload is, for example, the amount of excavated earth and sand and the amount of earth and sand loaded onto a dump truck platform. The shovel 100 is configured to send the construction information related to the shovel 100 to the external device through the communication device T1 at predetermined time intervals.

The position measurement device P1 is configured to measure the position of the upper swiveling body 3. The position measurement device P1 may be configured to measure a direction of the upper swiveling body 3. In the present embodiment, the position measurement device P1 is, for example, a GNSS compass. The position measurement device P1 detects the position and the direction of the upper swiveling body 3 and outputs a detected value to the controller 30. Therefore, the position measurement device P1 can function as a direction detecting device that detects the direction of the upper swiveling body 3. The direction detecting device may be a direction sensor attached to the upper swiveling body 3.

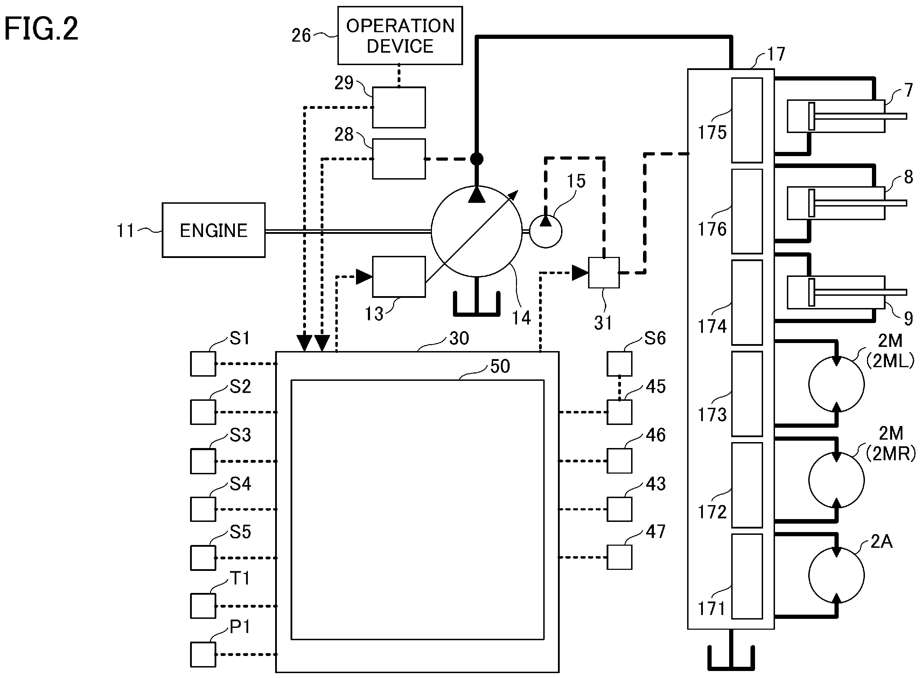

FIG. 2 is a block diagram illustrating a configuration example of a driving system of the shovel 100, and a mechanical power system, a hydraulic oil line, a pilot line, and an electric control system are illustrated with a double line, a solid line, a dashed line, and a dotted line, respectively.

The driving system of the shovel 100 mainly includes, for example, the engine 11, a regulator 13, a main pump 14, a pilot pump 15, a control valve unit 17, an operation device 26, a discharge pressure sensor 28, an operation sensor 29, the controller 30, and a proportional valve 31.

The engine 11 is a driving source of the shovel 100. In the present embodiment, the engine 11 is, for example, a diesel engine that is operated to maintain a predetermined rotation speed. Output shafts of the engine 11 are coupled to respective input shafts of the main pump 14 and the pilot pump 15.

The main pump 14 is configured to feed hydraulic oil to the control valve unit 17 through the hydraulic oil line. In the present embodiment, the main pump 14 is a swashplate variable displacement hydraulic pump.

The regulator 13 is configured to control the discharge amount of the main pump 14. In the present embodiment, the regulator 13 controls the discharge amount of the main pump 14 by adjusting the swashplate tilting angle of the main pump 14 in response to a control command from the controller 30. For example, the controller 30 receives an output of the operation sensor 29 or the like, and outputs a control command to the regulator 13 as needed to change the discharge amount of the main pump 14.

The pilot pump 15 feeds the hydraulic oil through the pilot line to various hydraulic control devices, including the proportional valve 31. In the present embodiment, the pilot pump 15 is a fixed displacement hydraulic pump. However, the pilot pump 15 may be omitted. In this case, the function performed by the pilot pump 15 may be achieved by the main pump 14. That is, the main pump 14 may be provided with a circuit other than a function of feeding the hydraulic oil to the control valve unit 17, and may have a function of feeding the hydraulic oil to the proportional valve 31 or the like after the feed pressure of the hydraulic oil is lowered by restriction or the like.

The control valve unit 17 is a hydraulic control device that controls a hydraulic system in the shovel 100. In the present embodiment, the control valve unit 17 includes control valves 171 to 176. The control valve unit 17 may selectively feed the hydraulic oil discharged by the main pump 14 to one or more hydraulic actuators through the control valves 171 to 176. The control valves 171 to 176 are configured to control the flow rate of the hydraulic oil flowing from the main pump 14 to the hydraulic actuator and the flow rate of the hydraulic oil flowing from the hydraulic actuator to a hydraulic oil tank. The hydraulic actuator includes the boom cylinder 7, the arm cylinder 8, the bucket cylinder 9, a traveling hydraulic motor 2M, and a swiveling hydraulic motor 2A. The traveling hydraulic motor 2M includes a left-side traveling hydraulic motor 2ML and a right-side traveling hydraulic motor 2MR. The swiveling hydraulic motor 2A may be a swiveling electric-powered electric generating device as an electric-powered actuator.

The operation device 26 is a device used by an operator for operating the actuator. The actuator includes the hydraulic actuator, the electric-powered actuator, or both.

The discharge pressure sensor 28 is configured to detect the discharge pressure of the main pump 14. In the present embodiment, the discharge pressure sensor 28 outputs a detected value to the controller 30.

The operation sensor 29 is configured to detect an operation content of the operator using the operation device 26. In the present embodiment, the operation sensor 29 detects the direction and the amount of the operation of the operation device 26 corresponding to each of the actuators, and outputs a detected value to the controller 30. In the present embodiment, the controller 30 controls an opening area of the proportional valve 31 in accordance with the output of the operation sensor 29. The controller 30 feeds the hydraulic oil discharged by the pilot pump 15 to pilot ports of corresponding control valves in the control valve unit 17. The pressure (pilot pressure) of the hydraulic oil fed to each of the pilot ports is, in principle, a pressure in accordance with the direction and the amount of the operation of the operation device 26 corresponding to each of the hydraulic actuators. In this way, the operation device 26 is configured to feed the hydraulic oil discharged by the pilot pump 15 to the pilot ports of the corresponding control valves in the control valve unit 17.

The proportional valve 31, which functions as a machine control valve, is disposed in a conduit connecting the pilot pump 15 to the pilot port of the control valve in the control valve unit 17 and is configured to change the flow area of the conduit. In the present embodiment, the proportional valve 31 operates in response to a control command output by the controller 30. Thus, the controller 30 can feed the hydraulic oil discharged by the pilot pump 15 to the pilot port of the control valve in the control valve unit 17 through the proportional valve 31, independently of the operation of the operation device 26 by the operator.

With this configuration, even if no operation is being performed on a specific operation device 26, the controller 30 can operate the hydraulic actuator corresponding to the specific operation device 26.

Next, the machine control device 50 included in the controller 30 will be described. The machine control device 50 is configured to perform, for example, a machine guidance function. In the present embodiment, the machine control device 50 communicates work information to the operator, such as the distance between the target construction surface and a working portion of the attachment. Information related to the target construction surface is stored in the storage device 47 in advance, for example. The machine control device 50 may obtain the information related to the target construction surface from the external device through the communication device T1. The information related to the target construction surface is, for example, expressed in a reference coordinate system. The reference coordinate system is, for example, the world geodetic system. The world geodetic system is a three-dimensional orthogonal XYZ coordinate system in which the origin is set at the center of gravity of the globe, the X axis is taken in a direction toward the intersection between the Greenwich meridian and the equator, the Y axis is taken in a direction at 90 degrees of the east longitude, and the Z axis is taken in a direction toward the North Pole. The target construction surface may be set based on a relative positional relationship to a reference point. In this case, the operator may define a given point of the construction site as the reference point. The working portion of the attachment is, for example, the tip end (toe) of the bucket 6 or the back surface of the bucket 6. The machine control device 50 may be configured to guide the operation of the shovel 100 by communicating operation information to the operator through, for example, the display device 45 or the sound output device 43.

The machine control device 50 may perform a machine control function that automatically assists the manual operation of the shovel 100 performed by the operator. For example, the machine control device 50 may automatically operate the boom 4, the arm 5, the bucket 6, or any combination thereof so that the target construction surface coincides with the position of the tip of the bucket 6 when the operator manually performs an excavating operation.

In the present embodiment, the machine control device 50 is incorporated into the controller 30, but may be a control device separately provided from the controller 30. In this case, the machine control device 50 is, for example, formed by a computer including, a CPU and an internal memory, in a manner similar to the controller 30. The various functions of the machine control device 50 are achieved by the CPU executing a program stored in the internal memory. The machine guidance device 50 and the controller 30 are communicably connected to each other through a communication network such as CAN. Also, the machine guidance device 50 may be mounted to a management device such as a server installed in an external facility or may be mounted to an assistant device such as a smartphone carried by a worker around the shovel 100.

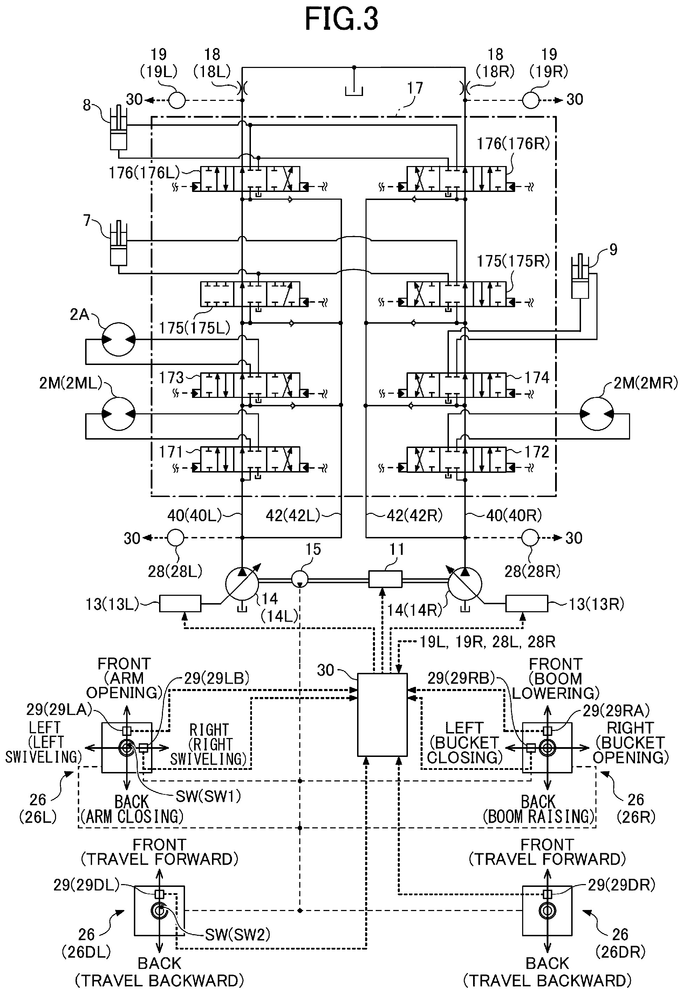

Next, a configuration example of the hydraulic system mounted to the shovel 100 will be described with reference to FIG. 3. FIG. 3 is a view illustrating a configuration example of the hydraulic system mounted to the shovel 100. In FIG. 3, the mechanical power system, the hydraulic oil line, the pilot line, and the electric control system are illustrated with a double line, a solid line, a dashed line, and a dotted line, respectively.

The hydraulic system of the shovel 100 mainly includes, for example, the engine 11, a regulator 13, a main pump 14, a pilot pump 15, a control valve unit 17, an operation device 26, a discharge pressure sensor 28, an operation sensor 29, and the controller 30.

In FIG. 3, the hydraulic system is configured to circulate the hydraulic oil from the main pump 14 driven by the engine 11 to the hydraulic oil tank through a center bypass conduit 40 or a parallel conduit 42.

The engine 11 is a driving source of the shovel 100. In the present embodiment, the engine 11 is, for example, a diesel engine that is operated to maintain a predetermined rotation speed. Output shafts of the engine 11 are coupled to respective input shafts of the main pump 14 and the pilot pump 15.

The main pump 14 is configured to feed the hydraulic oil to the control valve unit 17 through the hydraulic oil line. In the present embodiment, the main pump 14 is a swashplate variable displacement hydraulic pump.

The regulator 13 is configured to control the discharge amount of the main pump 14. In the present embodiment, the regulator 13 controls the discharge amount of the main pump 14 by adjusting the swashplate tilting angle of the main pump 14 in response to a control command from the controller 30.

The pilot pump 15 is one example of a pilot pressure generating device, and is configured to feed the hydraulic oil to a hydraulic pressure control device through the pilot line. In the present embodiment, the pilot pump 15 is a fixed displacement hydraulic pump. However, the pilot pressure generating device may be achieved by the main pump 14. That is, the main pump 14 may have a function of feeding the hydraulic oil to various hydraulic control devices through the pilot line, in addition to the function of feeding the hydraulic oil to the control valve unit 17 through the hydraulic oil line. In this case, the pilot pump 15 may be omitted.

The control valve unit 17 is a hydraulic control device that controls the hydraulic system in the shovel 100. In the present embodiment, the control valve unit 17 includes control valves 171 to 176. The control valve 175 includes a control valve 175L and a control valve 175R, and the control valve 176 includes a control valve 176L and a control valve 176R. The control valve unit 17 is configured to selectively feed the hydraulic oil discharged by the main pump 14 to one or more hydraulic actuators through the control valves 171 to 176. The control valves 171 to 176 control, for example, the flow rate of the hydraulic oil flowing from the main pump 14 to the hydraulic actuator and the flow rate of the hydraulic oil flowing from the hydraulic actuator to the hydraulic oil tank. The hydraulic actuator includes the boom cylinder 7, the arm cylinder 8, the bucket cylinder 9, the traveling hydraulic motor 2M, and the swiveling hydraulic motor 2A. The traveling hydraulic motor 2M includes the left-side traveling hydraulic motor 2ML and the right-side traveling hydraulic motor 2MR.

The operation device 26 is configured so that the operator can operate the actuator. In the present embodiment, the operation device 26 includes a hydraulic actuator operation device configured so that the operator can operate the hydraulic actuator. Specifically, the hydraulic actuator operation device is configured to feed, through the pilot line, the hydraulic oil discharged by the pilot pump 15 to the pilot port of the corresponding control valve in the control valve unit 17. The pressure (pilot pressure) of the hydraulic oil fed to each of the pilot ports is a pressure in accordance with the direction and the amount of the operation of the operation device 26 corresponding to each of the hydraulic actuators.

The discharge pressure sensor 28 is configured to detect the discharge pressure of the main pump 14. In the present embodiment, the discharge pressure sensor 28 outputs a detected value to the controller 30.

The operation sensor 29 is configured to detect an operation content of the operator using the operation device 26. In the present embodiment, the operation sensor 29 detects the direction and the amount of the operation of the operation device 26 corresponding to each of the actuators, and outputs a detected value to the controller 30.

The main pump 14 includes a left main pump 14L and a right main pump 14R. The left main pump 14L circulates the hydraulic oil to the hydraulic oil tank through a left center bypass conduit 40L or a left parallel conduit 42L, and the right main pump 14R circulates the hydraulic oil to the hydraulic oil tank through a right center bypass conduit 40R or a right parallel conduit 42R.

The left center bypass conduit 40L is a hydraulic oil line passing through the control valves 171, 173, 175L, and 176L disposed in the control valve unit 17. The right center bypass conduit 40R is a hydraulic oil line passing through the control valves 172, 174, 175R, and 176R disposed in the control valve unit 17.

The control valve 171 is a spool valve that feeds the hydraulic oil discharged by the left main pump 14L to the left-side traveling hydraulic motor 2ML, and switches the flow of the hydraulic oil for discharging the hydraulic oil discharged by the left-side traveling hydraulic motor 2ML to the hydraulic oil tank.

The control valve 172 is a spool valve that feeds the hydraulic oil discharged by the right main pump 14R to the right-side traveling hydraulic motor 2MR, and switches the flow of the hydraulic oil for discharging the hydraulic oil discharged by the right-side traveling hydraulic motor 2MR to the hydraulic oil tank.

The control valve 173 is a spool valve that feeds the hydraulic oil discharged by the left main pump 14L to the swiveling hydraulic motor 2A, and switches the flow of the hydraulic oil for discharging the hydraulic oil discharged by the swiveling hydraulic motor 2A to the hydraulic oil tank.

The control valve 174 is a spool valve that feeds the hydraulic oil discharged by the right main pump 14R to the bucket cylinder 9, and switches the flow of the hydraulic oil for discharging the hydraulic oil in the bucket cylinder 9 to the hydraulic oil tank.

The control valve 175L is a spool valve that switches the flow of the hydraulic oil for feeding the hydraulic oil discharged by the left main pump 14L to the boom cylinder 7. The control valve 175R is a spool valve that feeds the hydraulic oil discharged by the right main pump 14R to the boom cylinder 7, and switches the flow of the hydraulic oil for discharging the hydraulic oil in the boom cylinder 7 to the hydraulic oil tank.

The control valve 176L is a spool valve that feeds the hydraulic oil discharged by the left main pump 14L to the arm cylinder 8, and switches the flow of the hydraulic oil for discharging the hydraulic oil in the arm cylinder 8 to the hydraulic oil tank.

The control valve 176R is a spool valve that feeds the hydraulic oil discharged by the right main pump 14R to the arm cylinder 8, and switches the flow of the hydraulic oil for discharging the hydraulic oil in the arm cylinder 8 to the hydraulic oil tank.

The left parallel conduit 42L is a hydraulic oil line parallel to the left center bypass conduit 40L. The left parallel conduit 42L can feed the hydraulic oil to a downstream control valve when the flow of the hydraulic oil passing through the left center bypass conduit 40L is restricted or blocked by the control valve 171, 173, or 175L. The right parallel conduit 42R is a hydraulic oil line parallel to the right center bypass conduit 40R. The right parallel conduit 42R can feed the hydraulic oil to a downstream control valve when the flow of the hydraulic oil passing through the right center bypass conduit 40R is restricted or blocked by the control valve 172, 174, or 175R.

The regulator 13 includes a left regulator 13L and a right regulator 13R. The left regulator 13L controls the discharge amount of the left main pump 14L by adjusting the swashplate tilting angle of the left main pump 14L in accordance with the discharge pressure of the left main pump 14L. Specifically, the left regulator 13L, for example, adjusts the swashplate tilting angle of the left main pump 14L in accordance with an increase in the discharge pressure of the left main pump 14L to reduce the discharge amount. The same applies to the right regulator 13R. This is to prevent absorption power (absorption horsepower) of the main pump 14, which is represented as a product of the discharge pressure and the discharge amount, from exceeding output power (output horsepower) of the engine 11.

The operation device 26 includes a left operation lever 26L, a right operation lever 26R, and a traveling lever 26D. The traveling lever 26D includes a left traveling lever 26DL and a right traveling lever 26DR.

The left operation lever 26L is used for the swivel operation and the operation of the arm 5. The left operation lever 26L, when operated in the forward and backward directions, utilizes the hydraulic oil discharged by the pilot pump 15 to introduce a control pressure in accordance with the amount of the lever operation into the pilot port of the control valve 176. When operated in the leftward and rightward directions, the hydraulic oil discharged by the pilot pump 15 is used to introduce the control pressure in accordance with the amount of the lever operation into the pilot port of the control valve 173.

Specifically, the left operation lever 26L introduces the hydraulic oil to the right pilot port of the control valve 176L and introduces the hydraulic oil to the left pilot port of the control valve 176R when operated in an arm closing direction. The left operation lever 26L, when operated in an arm opening direction, introduces the hydraulic oil to the left pilot port of the control valve 176L and introduces the hydraulic oil to the right pilot port of the control valve 176R. The left operation lever 26L introduces the hydraulic oil to the left pilot port of the control valve 173 when operated in a leftward swiveling direction and introduces the hydraulic oil to the right pilot port of the control valve 173 when operated in a rightward swiveling direction.

The right operation lever 26R is used to operate the boom 4 and the bucket 6. The right operation lever 26R utilizes the hydraulic oil discharged by the pilot pump 15 when operated in the forward and backward directions to introduce a control pressure in accordance with the amount of the lever operation into the pilot port of the control valve 175. When operated in the leftward and rightward directions, the hydraulic oil discharged by the pilot pump 15 is used to introduce the control pressure in accordance with the amount of the lever operation into the pilot port of the control valve 174.

Specifically, the right operation lever 26R introduces the hydraulic oil to the left pilot port of the control valve 175R when operated in the boom lowering direction. The right operation lever 26R, when operated in the boom raising direction, introduces the hydraulic oil to the right pilot port of the control valve 175L and introduces the hydraulic oil to the left pilot port of the control valve 175R. The right operation lever 26R introduces the hydraulic oil to the right pilot port of the control valve 174 when operated in the bucket closing direction, and introduces the hydraulic oil to the left pilot port of the control valve 174 when operated in the bucket opening direction.

In the following, the left operation lever 26L operated in the leftward and rightward directions may be referred to as a "swivel operation lever" and the left operation lever 26L operated in the forward and backward directions may be referred to as an "arm operation lever". The right operation lever 26R operated in the leftward and rightward directions may be referred to as a "bucket operation lever" and the right operation lever 26R operated in the forward and backward directions may be referred to as a "boom operation lever".

The traveling lever 26D is used to operate a crawler 1C. Specifically, the left traveling lever 26DL is used to operate a left crawler 1CL. It may be configured to interlock with the left traveling pedal. The left traveling lever 26DL, when operated in the forward and backward directions, utilizes the hydraulic oil discharged by the pilot pump 15 to introduce the control pressure in accordance with the amount of the lever operation into the pilot port of the control valve 171. The right traveling lever 26DR is used to operate a right crawler 1CR. It may be configured to interlock with the right traveling pedal. The right traveling lever 26DR, when operated in the forward and backward directions, utilizes the hydraulic oil discharged by the pilot pump 15 to introduce the control pressure in accordance with the amount of the lever operation into the pilot port of the control valve 172.

The discharge pressure sensor 28 includes a discharge pressure sensor 28L and a discharge pressure sensor 28R. The discharge pressure sensor 28L detects the discharge pressure of the left main pump 14L and outputs a detected value to the controller 30. The same applies to the discharge pressure sensor 28R.

The operation sensor 29 includes operation sensors 29LA, 29LB, 29RA, 29RB, 29DL, and 29DR. The operation sensor 29LA detects the content of the operation in the forward and backward directions by the operator relative to the left operation lever 26L and outputs a detected value to the controller 30. The content of the operation is, for example, the direction of the lever operation and the amount of the lever operation (angle of the lever operation).

Similarly, the operation sensor 29LB detects the content of the operation by the operator in the leftward and rightward directions relative to the left operation lever 26L and outputs a detected value to the controller 30. The operation sensor 29RA detects the content of the operation by the operator in the forward and backward directions relative to the right operation lever 26R and outputs a detected value to the controller 30. The operation sensor 29RB detects the content of the operation by the operator in the leftward and rightward directions relative to the right operation lever 26R and outputs a detected value to the controller 30. The operation sensor 29DL detects the content of the operation by the operator in the forward and backward directions relative to the left traveling lever 26DL and outputs a detected value to the controller 30. The operation sensor 29DR detects the content of the operation by the operator in the forward and backward directions relative to the right traveling lever 26DR and outputs a detected value to the controller 30.

The controller 30 receives the output of the operation sensor 29 and outputs a control command to the regulator 13 as needed to change the discharge amount of the main pump 14. The controller 30 receives an output of a control pressure sensor 19 disposed upstream of a restrictor 18, and outputs a control command to the regulator 13 as needed to change the discharge amount of the main pump 14. The restrictor 18 includes a left restrictor 18L and a right restrictor 18R, and the control pressure sensor 19 includes a left control pressure sensor 19L and a right control pressure sensor 19R.

In the left center bypass conduit 40L, the left restrictor 18L is disposed between the control valve 176L, which is located the most downstream, and the hydraulic oil tank. Therefore, the flow of hydraulic oil discharged by the left main pump 14L is limited by the left restrictor 18L. The left restrictor 18L generates a control pressure for controlling the left regulator 13L. The left control pressure sensor 19L is a sensor for detecting this control pressure and outputs a detected value to the controller 30. The controller 30 controls the discharge amount of the left main pump 14L by adjusting the tilting angle of the swashplate of the left main pump 14L in accordance with the control pressure. The controller 30 decreases the discharge amount of the left main pump 14L as the control pressure increases, and increases the discharge amount of the left main pump 14L as the control pressure decreases. The discharge amount of the right main pump 14R is controlled in the same manner.

Specifically, when none of the hydraulic actuators of the shovel 100 is in the standby state as illustrated in FIG. 3, the hydraulic oil discharged by the left main pump 14L passes through the left center bypass conduit 40L and reaches the left restrictor 18L. The flow of the hydraulic oil discharged by the left main pump 14L increases the control pressure generated upstream of the left restrictor 18L. As a result, the controller 30 reduces the discharge amount from the left main pump 14L to the allowable minimum discharge amount and suppresses the pressure loss (pumping loss) when the discharged hydraulic oil passes through the left center bypass conduit 40L. On the other hand, when any of the hydraulic actuators is operated, the hydraulic oil discharged by the left main pump 14L flows into the hydraulic actuator to be operated through a control valve corresponding to the hydraulic actuator to be operated. The flow of the hydraulic oil discharged by the left main pump 14L decreases or extinguishes the amount reaching the left restrictor 18L, thereby reducing the control pressure generated upstream of the left restrictor 18L. As a result, the controller 30 increases the discharge rate of the left main pump 14L to circulate sufficient hydraulic oil in the hydraulic actuator to be operated to ensure drive of the hydraulic actuator to be operated. The controller 30 controls the discharge amount of the right main pump 14R in the same manner.

With the above-described configuration, the hydraulic system of FIG. 3 can reduce wasteful energy consumption at the main pump 14 in standby conditions. The wasteful energy consumption includes pumping losses caused by the hydraulic oil discharged by the main pump 14 in the center bypass conduit 40. The hydraulic system of FIG. 3 ensures that when the hydraulic actuator is operated, sufficient hydraulic fluid is fed from the main pump 14 to the hydraulic actuator to be actuated.

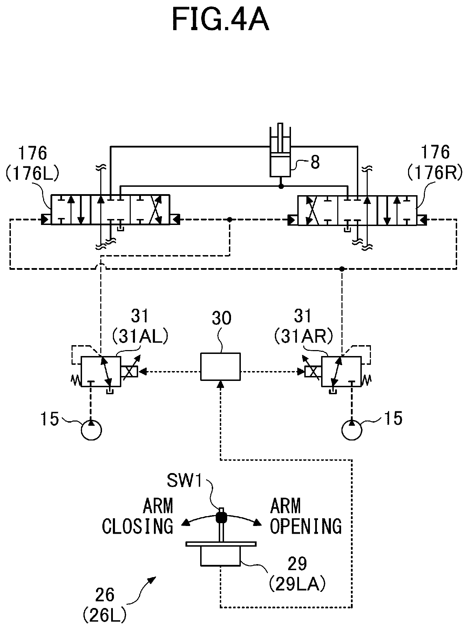

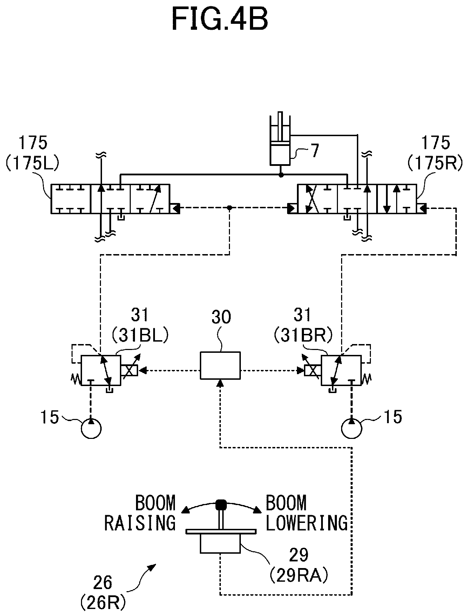

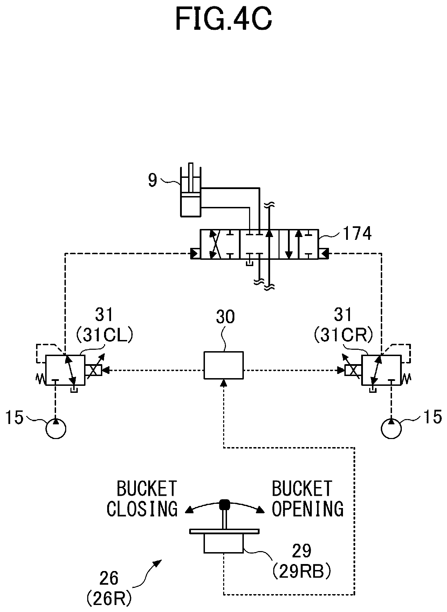

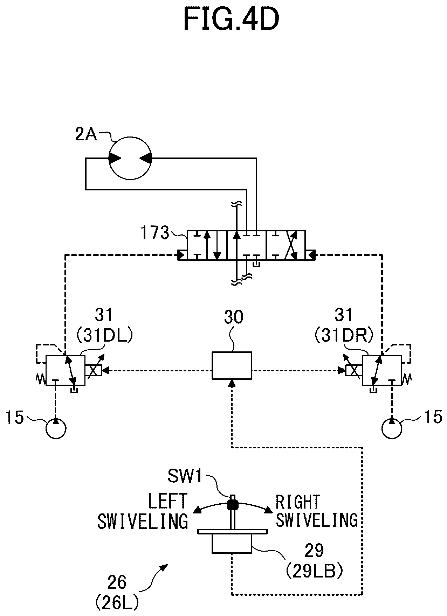

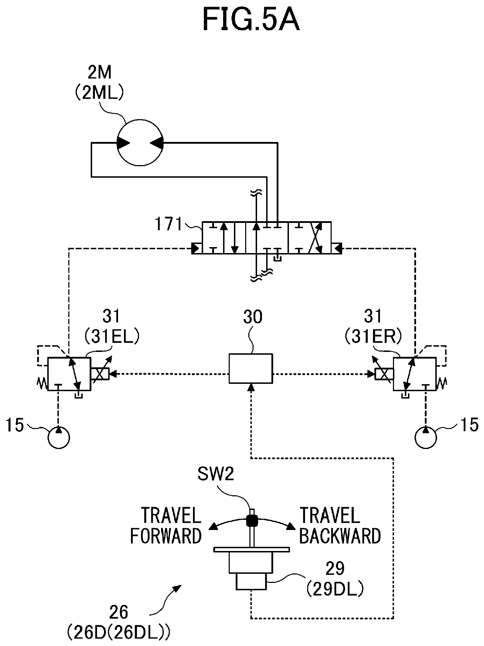

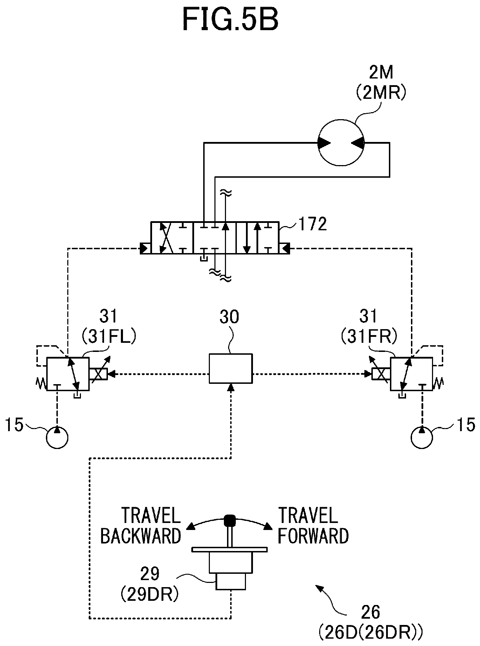

Next, referring to FIG. 4A to FIG. 4D, FIG. 5A, and FIG. 5B, a configuration for the controller 30 to operate the actuators by machine control functions will be described. FIG. 4A to FIG. 4D, FIG. 5A, and FIG. 5B are views of parts extracted from the hydraulic system. Specifically, FIG. 4A is a view of a part extracted from the hydraulic system in relation to the operation of the arm cylinder 8. FIG. 4B is a view of a part extracted from the hydraulic system in relation to the operation of the boom cylinder 7. FIG. 4C is a view of a part extracted from the hydraulic system in relation to the operation of the bucket cylinder 9. FIG. 4D is a view of a part extracted from the hydraulic system in relation to the operation of the swiveling hydraulic motor 2A. FIG. 5A is a view of a part extracted from the hydraulic system in relation to the operation of the left-side traveling hydraulic motor 2ML. FIG. 5B is a view of a part extracted from the hydraulic system in relation to the operation of the right-side traveling hydraulic motor 2MR.

As illustrated in FIG. 4A to FIG. 4D, FIG. 5A, and FIG. 5B, the hydraulic system includes the proportional valve 31. The proportional valve 31 includes proportional valves 31AL to 31DL and 31AR to 31DR.

The proportional valve 31 functions as a control valve for machine control. The proportional valve 31 is disposed in a conduit connecting the pilot pump 15 to the pilot port of the corresponding control valve in the control valve unit 17, and is configured to change the flow path area of the conduit. In the present embodiment, the proportional valve 31 operates in response to a control command output by the controller 30. Thus, the controller 30 can feed the hydraulic oil discharged by the pilot pump 15 to the pilot port of the corresponding control valve in the control valve unit 17 through the proportional valve 31, independently of the operation of the operation device 26 by the operator. The controller 30 can apply a pilot pressure generated by the proportional valve 31 to the pilot port of the corresponding control valve.

With this configuration, even if no operation is being performed on a specific operation device 26, the controller 30 can operate the hydraulic actuator corresponding to the specific operation device 26. Also, even if an operation is being performed on the specific operation device 26, the controller 30 can forcibly stop the operation of the hydraulic actuator corresponding to the specific operation device 26.

For example, as illustrated in FIG. 4A, the left operation lever 26L is used to operate the arm 5. Specifically, the left operation lever 26L utilizes the hydraulic oil discharged by the pilot pump 15 to apply a pilot pressure to the pilot port of the control valve 176 in response to the operation in the forward and backward directions. More specifically, the left operation lever 26L, when operated in the arm closing direction (backward direction), applies a pilot pressure in accordance with the operation amount to the right pilot port of the control valve 176L and the left pilot port of the control valve 176R. The left operation lever 26L, when operated in the arm opening direction (forward direction), applies a pilot pressure in accordance with the operation amount to the left pilot port of the control valve 176L and the right pilot port of the control valve 176R.

The operation device 26 is provided with a switch SW. In the present embodiment, the switch SW includes a switch SW1 and a switch SW2. The switch SW1 is a push-button switch provided at the end of the left operation lever 26L. The operator can operate the left operation lever 26L while pressing the switch SW1. The switch SW1 may be provided at the right operation lever 26R or at other locations within the cab 10. The switch SW2 is a push-button switch provided at the end of the left traveling lever 26DL. The operator can operate the left traveling lever 26DL while pressing the switch SW2. The switch SW2 may be provided at the right traveling lever 26DR or at other locations within the cab 10.

The operation sensor 29LA detects the content of the operation in the forward and backward directions by the operator relative to the left operation lever 26L and outputs a detected value to the controller 30.

The proportional valve 31AL operates in response to a control command (electric current command) output by the controller 30, thereby adjusting the pilot pressure of the hydraulic oil introduced from the pilot pump 15 to the right pilot port of the control valve 176L and the left pilot port of the control valve 176R through the proportional valve 31AL. The proportional valve 31AR operates in response to a control command (electric current command) output by the controller 30, thereby adjusting the pilot pressure of the hydraulic oil introduced from the pilot pump 15 to the left pilot port of the control valve 176L and the right pilot port of the control valve 176R through the proportional valve 31AR. The proportional valve 31AL can adjust the pilot pressure so that the control valve 176L and the control valve 176R can be stopped at a given valve position. Similarly, the proportional valve 31AR can adjust the pilot pressure so that the control valve 176L and the control valve 176R can be stopped at a given valve position.

With this configuration, the controller 30 can feed the hydraulic oil discharged by the pilot pump 15 to the right pilot port of the control valve 176L and the left pilot port of the control valve 176R through the proportional valve 31AL in response to the arm closing operation by the operator. Also, the controller 30 can feed the hydraulic oil discharged by the pilot pump 15 to the right pilot port of the control valve 176L and the left pilot port of the control valve 176R through the proportional valve 31AL independently of the arm closing operation by the operator. That is, the controller 30 can close the arm 5 in response to the arm closing operation by the operator or independently of the arm closing operation by the operator.

Also, the controller 30 can feed the hydraulic oil discharged by the pilot pump 15 to the left pilot port of the control valve 176L and the right pilot port of the control valve 176R through the proportional valve 31AR in response to the arm opening operation by the operator. Also, the controller 30 can feed the hydraulic oil discharged by the pilot pump 15 to the left pilot port of the control valve 176L and the right pilot port of the control valve 176R through the proportional valve 31AR independently of the arm opening operation by the operator. That is, the controller 30 can open the arm 5 in response to the arm opening operation by the operator or independently of the arm opening operation by the operator.

With this configuration, even if the arm closing operation is being performed by the operator, the controller 30, as needed, can reduce the pilot pressure applied to the pilot port on the closing side of the control valve 176 (the left pilot port of the control valve 176L and the right pilot port of the control valve 176R) and forcibly stop the closing movement of the arm 5. The same applies to the case of forcibly stopping the opening movement of the arm 5 when the arm opening operation is performed by the operator.

Alternatively, even if the arm closing operation is being performed by the operator, the controller 30, as needed, may forcibly stop the closing movement of the arm 5 by controlling the proportional valve 31AR to increase the pilot pressure applied to the pilot port on the opening side of the control valve 176, which is located opposite to the pilot port on the closing side of the control valve 176, (the right pilot port of the control valve 176L and the left pilot port of the control valve 176R), thereby forcibly returning the control valve 176 to a neutral position. The same applies to the case of forcibly stopping the opening movement of the arm 5 when the arm opening operation is performed by the operator.

Although description with reference to FIG. 4B to FIG. 4D, FIG. 5A, and FIG. 5B is omitted in the following, the same applies to: the case of forcibly stopping the movement of the boom 4 when a boom raising operation or a boom lowering operation is being performed by the operator; the case of forcibly stopping the movement of the bucket 6 when a bucket closing operation or a bucket opening operation is being performed by the operator; and the case of forcibly stopping the swiveling movement of the upper swiveling body 3 when a swiveling operation is being performed by the operator. Also, the same applies to the case of forcibly stopping a traveling movement of the lower traveling body 1 when a traveling operation is being performed by the operator.

Also, as illustrated in FIG. 4B, the right operation lever 26R is used to operate the boom 4. Specifically, the right operation lever 26R utilizes the hydraulic oil discharged by the pilot pump 15 to apply a pilot pressure to the pilot port of the control valve 175 in response to the operation in the forward and backward directions. More specifically, the right operation lever 26R, when operated in a boom raising direction (backward direction), applies a pilot pressure in accordance with the operation amount to the right pilot port of the control valve 175L and the left pilot port of the control valve 175R. The right operation lever 26R, when operated in a boom lowering direction (forward direction), applies a pilot pressure in accordance with the operation amount to the right pilot port of the control valve 175R.

The operation sensor 29RA detects the content of the operation in the forward and backward directions by the operator relative to the right operation lever 26R and outputs a detected value to the controller 30.

The proportional valve 31BL operates in response to a control command (electric current command) output by the controller 30, thereby adjusting the pilot pressure of the hydraulic oil introduced from the pilot pump 15 to the right pilot port of the control valve 175L and the left pilot port of the control valve 175R through the proportional valve 31BL. The proportional valve 31BR operates in response to a control command (electric current command) output by the controller 30, thereby adjusting the pilot pressure of the hydraulic oil introduced from the pilot pump 15 to the right pilot port of the control valve 175R through the proportional valve 31BR. The proportional valve 31BL can adjust the pilot pressure so that the control valve 175L and the control valve 175R can be stopped at a given valve position. Also, the proportional valve 31BR can adjust the pilot pressure so that the control valve 175R can be stopped at a given valve position.

With this configuration, the controller 30 can feed the hydraulic oil discharged by the pilot pump 15 to the right pilot port of the control valve 175L and the left pilot port of the control valve 175R through the proportional valve 31BL in response to the boom raising operation by the operator. Also, the controller 30 can feed the hydraulic oil discharged by the pilot pump 15 to the right pilot port of the control valve 175L and the left pilot port of the control valve 175R through the proportional valve 31BL independently of the boom raising operation by the operator. That is, the controller 30 can raise the boom 4 in response to the boom raising operation by the operator or independently of the boom raising operation by the operator.

Also, the controller 30 can feed the hydraulic oil discharged by the pilot pump 15 to the right pilot port of the control valve 175R through the proportional valve 31BR in response to the boom lowering operation by the operator. Also, the controller 30 can feed the hydraulic oil discharged by the pilot pump 15 to the right pilot port of the control valve 175R through the proportional valve 31BR independently of the boom lowering operation by the operator. That is, the controller 30 can lower the boom 4 in response to the boom lowering operation by the operator or independently of the boom lowering operation by the operator.

As illustrated in FIG. 4C, the right operation lever 26R is used to operate the bucket 6. Specifically, the right operation lever 26R utilizes the hydraulic oil discharged by the pilot pump 15 to apply a pilot pressure to the pilot port of the control valve 174 in response to the operation in the leftward and rightward directions. More specifically, the right operation lever 26R, when operated in the bucket closing direction (leftward direction), applies a pilot pressure in accordance with the operation amount to the left pilot port of the control valve 174. The right operation lever 26R, when operated in the bucket opening direction (rightward direction), applies a pilot pressure in accordance with the operation amount to the right pilot port of the control valve 174.

The operation sensor 29RB detects the content of the operation in the leftward and rightward directions by the operator relative to the right operation lever 26R and outputs a detected value to the controller 30.

The proportional valve 31CL operates in response to a control command (electric current command) output by the controller 30, thereby adjusting the pilot pressure of the hydraulic oil introduced from the pilot pump 15 to the left pilot port of the control valve 174 through the proportional valve 31CL. The proportional valve 31CR operates in response to a control command (electric current command) output by the controller 30, thereby adjusting the pilot pressure of the hydraulic oil introduced from the pilot pump 15 to the right pilot port of the control valve 174 through the proportional valve 31CR. The proportional valve 31CL can adjust the pilot pressure so that the control valve 174 can be stopped at a given valve position. Similarly, the proportional valve 31CR can adjust the pilot pressure so that the control valve 174 can be stopped at a given valve position.

With this configuration, the controller 30 can feed the hydraulic oil discharged by the pilot pump 15 to the left pilot port of the control valve 174 through the proportional valve 31CL in response to the bucket closing operation by the operator. Also, the controller 30 can feed the hydraulic oil discharged by the pilot pump 15 to the left pilot port of the control valve 174 through the proportional valve 31CL independently of the bucket closing operation by the operator. That is, the controller 30 can close the bucket 6 in response to the bucket closing operation by the operator or independently of the bucket closing operation by the operator.

Also, the controller 30 can feed the hydraulic oil discharged by the pilot pump 15 to the right pilot port of the control valve 174 through the proportional valve 31CR in response to the bucket opening operation by the operator. Also, the controller 30 can feed the hydraulic oil discharged by the pilot pump 15 to the right pilot port of the control valve 174 through the proportional valve 31CR independently of the bucket opening operation by the operator. That is, the controller 30 can open the bucket 6 in response to the bucket opening operation by the operator or independently of the bucket opening operation by the operator.

As illustrated in FIG. 4D, the left operation lever 26L is used to operate the swiveling mechanism 2. Specifically, the left operation lever 26L utilizes the hydraulic oil discharged by the pilot pump 15 to apply a pilot pressure to the pilot port of the control valve 173 in response to the operation in the leftward and rightward directions. More specifically, the left operation lever 26L, when operated in the leftward swiveling direction (leftward direction), applies a pilot pressure in accordance with the operation amount to the left pilot port of the control valve 173. The left operation lever 26L, when operated in the rightward swiveling direction (rightward direction), applies a pilot pressure in accordance with the operation amount to the right pilot port of the control valve 173.

The operation sensor 29LB detects the content of the operation in the leftward and rightward directions by the operator relative to the left operation lever 26L and outputs a detected value to the controller 30.

The proportional valve 31DL operates in response to a control command (electric current command) output by the controller 30, thereby adjusting the pilot pressure of the hydraulic oil introduced from the pilot pump 15 to the left pilot port of the control valve 173 through the proportional valve 31DL. The proportional valve 31DR operates in response to a control command (electric current command) output by the controller 30, thereby adjusting the pilot pressure of the hydraulic oil introduced from the pilot pump 15 to the right pilot port of the control valve 173 through the proportional valve 31DR. The proportional valve 31DL can adjust the pilot pressure so that the control valve 173 can be stopped at a given valve position. Similarly, the proportional valve 31DR can adjust the pilot pressure so that the control valve 173 can be stopped at a given valve position.

With this configuration, the controller 30 can feed the hydraulic oil discharged by the pilot pump 15 to the left pilot port of the control valve 173 through the proportional valve 31DL in response to the leftward swiveling operation by the operator. Also, the controller 30 can feed the hydraulic oil discharged by the pilot pump 15 to the left pilot port of the control valve 173 through the proportional valve 31DL independently of the leftward swiveling operation by the operator. That is, the controller 30 can swivel the swiveling mechanism 2 leftward in response to the leftward swiveling operation by the operator or independently of the leftward swiveling operation by the operator.

Also, the controller 30 can feed the hydraulic oil discharged by the pilot pump 15 to the right pilot port of the control valve 173 through the proportional valve 31DR in response to the rightward swiveling operation by the operator. Also, the controller 30 can feed the hydraulic oil discharged by the pilot pump 15 to the right pilot port of the control valve 173 through the proportional valve 31DR independently of the rightward swiveling operation by the operator. That is, the controller 30 can swivel the swiveling mechanism 2 rightward in response to the rightward swiveling operation by the operator or independently of the rightward swiveling operation by the operator.

Also, as illustrated in FIG. 5A, the left traveling lever 26DL is used to operate the left crawler 1CL. Specifically, the left traveling lever 26DL utilizes the hydraulic oil discharged by the pilot pump 15 to apply a pilot pressure in accordance with the operation in the forward and backward directions to the pilot port of the control valve 171. More specifically, the left traveling lever 26DL, when operated in the traveling forward direction (forward direction), applies the pilot pressure in accordance with the operation amount to the left pilot port of the control valve 171. Also, the left traveling lever 26DL, when operated in the backward traveling direction (backward direction), applies the pilot pressure in accordance with the operation amount to the right pilot port of the control valve 171.

The operation sensor 29DL electrically detects the content of the operation by the operator in the forward and backward directions relative to the left traveling lever 26DL and outputs a detected value to the controller 30.

The proportional valve 31EL operates in response to an electric current command output by the controller 30. The proportional valve 31EL adjusts the pilot pressure of the hydraulic oil introduced from the pilot pump 15 to the left pilot port of the control valve 171 through the proportional valve 31EL. The proportional valve 31ER operates in response to an electric current command output by the controller 30. The proportional valve 31ER adjusts the pilot pressure of the hydraulic oil introduced from the pilot pump 15 to the right pilot port of the control valve 171 through the proportional valve 31ER. The proportional valves 31EL and 31ER can adjust the pilot pressure so that the control valve 171 can be stopped at a given valve position.

With this configuration, the controller 30 can feed the hydraulic oil discharged by the pilot pump 15 to the left pilot port of the control valve 171 through the proportional valve 31EL independently of the forward left traveling operation by the operator. That is, the left crawler 1CL can be caused to travel forward. Also, the controller 30 can feed the hydraulic oil discharged by the pilot pump 15 to the right pilot port of the control valve 171 through the proportional valve 31ER independently of the left traveling backward operation by the operator. That is, the left crawler 1CL can be caused to travel backward.

Also, as illustrated in FIG. 5B, the right traveling lever 26DR is used to operate the right crawler 1CR. Specifically, the right traveling lever 26DR utilizes the hydraulic oil discharged by the pilot pump 15 to apply a pilot pressure in accordance with the operation in the forward and backward directions to the pilot port of the control valve 172. More specifically, the right traveling lever 26DR, when operated in the traveling forward direction (forward direction), applies the pilot pressure in accordance with the operation amount to the right pilot port of the control valve 172. Also, the right traveling lever 26DR, when operated in the backward traveling direction (the backward direction), applies the pilot pressure in accordance with the operation amount to the right pilot port of the control valve 172.

The operation sensor 29DR electrically detects the content of the operation by the operator in the forward and backward directions relative to the right traveling lever 26DR and outputs a detected value to the controller 30.

The proportional valve 31FL operates in response to an electric current command output by the controller 30. The proportional valve 31FL adjusts the pilot pressure of the hydraulic oil introduced from the pilot pump 15 to the left pilot port of the control valve 172 through the proportional valve 31FL. The proportional valve 31FR operates in response to an electric current command output by the controller 30. The proportional valve 31FR adjusts the pilot pressure of the hydraulic oil introduced from the pilot pump 15 to the right pilot port of the control valve 172 through the proportional valve 31FR. The proportional valves 31FL and 31FR can adjust the pilot pressure so that the control valve 172 can be stopped at a given valve position.

With this configuration, the controller 30 can feed the hydraulic oil discharged by the pilot pump 15 to the right pilot port of the control valve 172 through the proportional valve 31FL independently of the forward right traveling operation by the operator. That is, the right crawler 1CR can be caused to travel forward. Also, the controller 30 can feed the hydraulic oil discharged by the pilot pump 15 to the left pilot port of the control valve 172 through the proportional valve 31FR independently of the right traveling backward operation by the operator. That is, the right crawler 1CR can be caused to travel backward.

Also, the shovel 100 may include a structure configured to automatically operate a bucket tilt mechanism. In this case, a part of the hydraulic system in relation to a bucket tilt cylinder forming the bucket tilt mechanism may be configured in the same manner as in, for example, the part of the hydraulic system in relation to the operation of the boom cylinder 7.

Although the operation device 26 that is an electric operation lever has been described, the operation device 26 may be a hydraulic operation lever rather than the electric operation lever. In this case, the amount of the lever operation of the hydraulic operation lever may be detected by a pressure sensor in the form of pressure and input to the controller 30. Also, an electromagnetic valve may be disposed between the operation device 26 that is the hydraulic operation lever, and the pilot port of each of the control valves. The electromagnetic valve is configured to operate in response to an electric signal from the controller 30. With this configuration, in response to manually operating the operation device 26 that is the hydraulic operation lever, the operation device 26 increases or decreases a pilot pressure in accordance with the amount of the lever operation, thereby moving each of the control valves. Also, each of the control valves may be configured with an electromagnetic spool valve. In this case, the electromagnetic spool valve operates in response to an electric signal from the controller 30 corresponding to the amount of the lever operation of the electric operation lever.

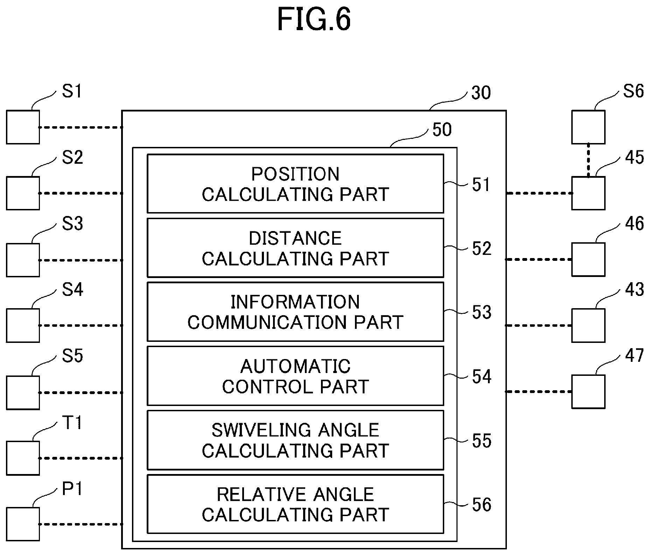

Next, a configuration example of the machine control device 50 will be described with reference to FIG. 6. FIG. 6 is a block diagram illustrating the configuration example of the machine control device 50. Specifically, the machine control device 50 obtains information from, for example, the boom angle sensor S1, the arm angle sensor S2, the bucket angle sensor S3, the machine body tilt sensor S4, the swivel angular velocity sensor S5, the camera S6, the position measurement device P1, the communication device T1, the input device 46, or any combination thereof. The machine control device 50, for example, calculates the distance between the bucket 6 and the target construction surface based on the obtained information and communicates the distance between the bucket 6 and the target construction surface to the operator of the shovel 100 with sound, image display, or both. Also, the machine control device 50 includes a position calculating part 51, a distance calculating part 52, an information communication part 53, and an automatic control part 54.

The position calculating unit 51 is configured to calculate a position of an object to be measured for the position thereof. In the present embodiment, the position calculating part 51 calculates a coordinate point of the working portion of the attachment in the reference coordinate system. Specifically, the position calculating part 51 calculates the coordinate point of the tip end (toe) of the bucket 6 from the respective rotation angles of the boom 4, the arm 5, and the bucket 6. The position calculating part 51 may calculate not only the coordinate point of the center of the toe of the bucket 6 but also the coordinate point of the left end of the toe of the bucket 6 and the coordinate point of the right end of the toe of the bucket 6.

The distance calculating part 52 is configured to calculate the distance between two objects to be measured for the positions thereof. In the present embodiment, the distance calculating part 52 calculates the vertical distance between the toe of the bucket 6 and the target construction surface. The distance calculating part 52 may calculate distances (e.g., the vertical distances) between the respective coordinate points of the left end and the right end of the toe of the bucket 6 and the target construction surface corresponding thereto so that the machine control device 50 can determine whether or not the shovel 100 faces the target construction surface straight.

The information communication part 53 is configured to communicate various information to the operator of the shovel 100. In the present embodiment, the information communication part 53 communicates various distances calculated by the distance calculating part 52 to the operator of the shovel 100. Specifically, the vertical distance between the toe of the bucket 6 and the target construction surface is communicated to the operator of the shovel 100 using visual information, audio information, or both.

For example, the information communication part 53 may communicate the length of the vertical distance between the toe of the bucket 6 and the target construction surface to the operator using an intermittent sound generated by the sound output device 43. In this case, the information communication part 53 may shorten intervals of the intermittent sound as the vertical distance decreases. The information communication part 53 may use a continuous sound and may change, for example, a pitch of the sound, strength of the sound, or both, thereby indicating a difference in the length of the vertical distance. The information communication part 53 may issue an alarm when the toe of the bucket 6 becomes lower than the target construction surface. The alarm is, for example, a continuous sound that is significantly greater than the intermittent sound.

The information communication part 53 may display the length of the vertical distance between the toe of the bucket 6 and the target construction surface as the work information on the display device 45. The display device 45 displays, for example, the work information received from the information communication part 53 together with image data received from the camera S6, on the screen. The information communication part 53 may communicate the length of the vertical distance to the operator using, for example, an image of an analog meter or an image of a bar graph indicator.

The automatic control part 54 automatically operates the actuator to automatically assist the manual operation of the shovel 100 performed by the operator. For example, when the operator manually performs the arm closing operation, the automatic control part 54 may automatically extend and retract the boom cylinder 7, the arm cylinder 8, the bucket cylinder 9, or any combination thereof so that the target construction surface coincides with the position of the toe of the bucket 6. In this case, the operator can close the arm 5 with the toe of the bucket 6 coinciding with the target construction surface by, for example, simply operating an arm operation lever in the closing direction. The automatic control may be configured to be performed when a predetermined switch, which is one of the input devices 46, is pressed. The predetermined switch is, for example, a machine control switch (hereinafter referred to as an "MC switch") and may be disposed at an end of the operation device 26 as a knob switch like the switch SW.

When the predetermined switch such as the MC switch is pressed, the automatic control part 54 may reduce the swiveling speed of the upper swiveling body 3 to cause the upper swiveling body 3 to face the target construction surface straight, and stop the upper swiveling body 3 at a position facing the target construction surface straight so that the upper swiveling body 3 faces the target construction surface straight. However, the automatic control part 54 may automatically rotate the swiveling hydraulic motor 2A in order to cause the upper swiveling body 3 to face the target construction surface straight when the predetermined switch (e.g., the MC switch) is pressed. In this case, the operator can cause the upper swiveling body 3 to face the target construction surface straight by simply pressing the predetermined switch or operating a swiveling operation lever while pressing the predetermined switch. Alternatively, the operator can cause the upper swiveling body 3 to face the target construction surface straight and start the machine control function by simply pressing the predetermined switch. In the following, the control of causing the upper swiveling body 3 to face the target construction surface straight is referred to as "straight facing control". In the straight facing control, the machine control device 50 determines that the shovel 100 faces the target construction surface straight when the vertical distance at the left end, which is the vertical distance between the coordinate point at the left end of the toe of the bucket 6 and the target construction surface, is equal to the vertical distance at the right end, which is the vertical distance between the coordinate point at the right end of the toe of the bucket 6 and the target construction surface. However, the machine control device 50 may determine that the shovel 100 faces the target construction surface straight when the difference between the vertical distance at the left end and the vertical distance at the right end is smaller than or equal to a predetermined value, which is not when the vertical distance at the left end is equal to the vertical distance at the right end, that is, which is not when the difference between the vertical distance at the left end and the vertical distance at the right end is zero. The machine control device 50 may inform the operator that the straight facing control has been completed, using visual information, audio information, or both when the machine control device 50 determines that the shovel 100 faces the target construction surface straight. That is, the machine control device 50 may inform the operator that the upper swiveling body 3 faces the target construction surface straight.

In the present embodiment, the automatic control part 54 can automatically operate each actuator by individually and automatically adjusting the pilot pressure applied to the control valve corresponding to each actuator. For example, in the straight facing control, the automatic control part 54 may operate the swiveling hydraulic motor 2A based on the difference between the vertical distance at the left end and the vertical distance at the right end. Specifically, when the swiveling operation lever is operated while the predetermined switch is pressed, the automatic control part 54 determines whether or not the swiveling operation lever is operated in a direction in which the upper swiveling body 3 faces the target construction surface straight. For example, when the swiveling operation lever is operated in a direction in which the vertical distance between the toe of the bucket 6 and the target construction surface (backslope) is increased, the automatic control part 54 does not perform the straight facing control. When the swiveling operation lever is operated in a direction in which the vertical distance between the toe of the bucket 6 and the target construction surface (backslope) is reduced, the automatic control part 54 performs the straight facing control. As a result, the automatic control part 54 can operate the swiveling hydraulic motor 2A so that the difference between the vertical distance at the left end and the vertical distance at the right end becomes smaller. Subsequently, the automatic control part 54 stops the swiveling hydraulic motor 2A when the difference is smaller than or equal to the predetermined value or is zero. Alternatively, the automatic control part 54 may set the swiveling angle at which the difference is smaller than or equal to the predetermined value or is zero as a target angle, and perform swiveling angle control so that a difference in the angle between the target angle and the current swiveling angle (detected value) becomes zero. In this case, the swiveling angle is, for example, the angle of a front-back axis of the upper swiveling body 3 with respect to the reference direction.

When an operation with respect to the target construction surface, such as an excavating operation or a slope finishing operation, is performed, the automatic control part 54 may automatically operate the actuator so that the upper swiveling body 3 maintains to face the target construction surface straight. For example, when the direction of the upper swiveling body 3 is changed due to excavation reaction forces or the like and the upper swiveling body 3 does not face the target construction surface straight, the automatic control part 54 may automatically operate the swiveling hydraulic motor 2A to cause the upper swiveling body 3 to immediately face the target construction surface straight. Alternatively, when the operation with respect to the target construction surface is being performed, the automatic control part 54 may proactively operate the actuator to prevent the direction of the upper swiveling body 3 from being changed due to excavation reaction forces or the like.

Also, the machine control device 50 further includes a swiveling angle calculating part 55 and a relative angle calculating part 56.

The swiveling angle calculating part 55 calculates the swiveling angle of the upper swiveling body 3. This is to determine the current direction of the upper swiveling body 3. In the present embodiment, the swiveling angle calculating part 55 calculates the angle of the front-back axis of the upper swiveling body 3 with respect to the reference direction based on an output of the GNSS compass as the position measurement device P1, as the swiveling angle. The swiveling angle calculating part 55 may calculate the swiveling angle based on an output of the swivel angular velocity sensor S5. When the reference point is set in the construction site, the swiveling angle calculating part 55 may use a direction in which the reference point is viewed from a swiveling axis as the reference direction.

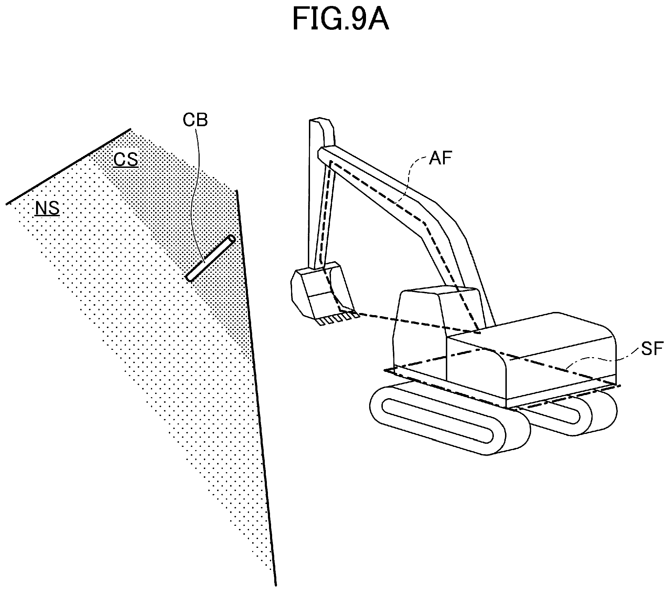

The swiveling angle indicates a direction in which the attachment operation surface extends. The attachment operation surface is, for example, a virtual plane that crosses the attachment in a longitudinal direction and is positioned perpendicular to a swiveling plane. The swiveling plane is, for example, a virtual plane including a bottom surface of a swiveling frame perpendicular to the swiveling axis. The machine control device 50, for example, determines that the upper swiveling body 3 faces the target construction surface straight when the machine control device 50 determines that an attachment operation plane AF (see FIG. 9A) includes a normal to the target construction surface.

The relative angle calculating part 56 calculates the relative angle as the swiveling angle necessary to cause the upper swiveling body 3 to face the target construction surface straight. The relative angle is, for example, a relative angle formed between a direction of the front-back axis of the upper swiveling body 3 when the upper swiveling body 3 faces the target construction surface straight and the current direction of the front-back axis of the upper swiveling body 3. In the present embodiment, the relative angle calculating part 56 calculates the relative angle based on the information related to the target construction surface stored in the storage device 47 and the swiveling angle calculated by the swiveling angle calculating part 55.

When the swiveling operation lever is operated while the predetermined switch is pressed, the automatic control part 54 determines whether or not the swiveling operation lever is operated in a direction of causing the upper swiveling body 3 to face the target construction surface straight. When the automatic control part 54 determines that the swiveling operation lever is operated in the direction of causing the upper swiveling body 3 to face the target construction surface, the automatic control part 54 sets the relative angle calculated by the relative angle calculating part 56 as the target angle. When the change of the swiveling angle after the rotation operation lever has been operated reaches the target angle, the automatic control part 54 determines that the upper swiveling body 3 faces the target construction surface straight, and stops the movement of the swiveling hydraulic motor 2A.

In this way, the machine control device 50 can cause the upper swiveling body 3 to face the target construction surface straight.

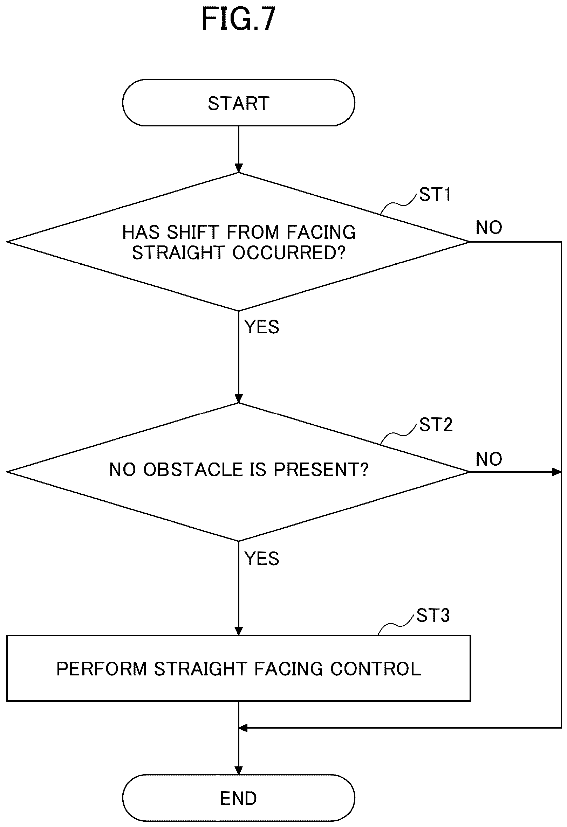

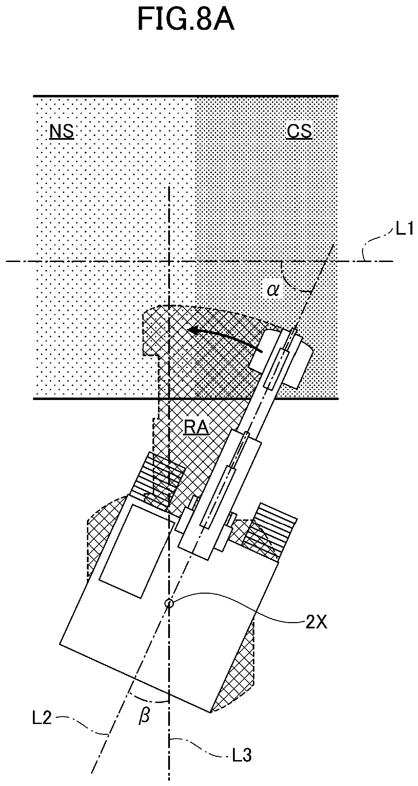

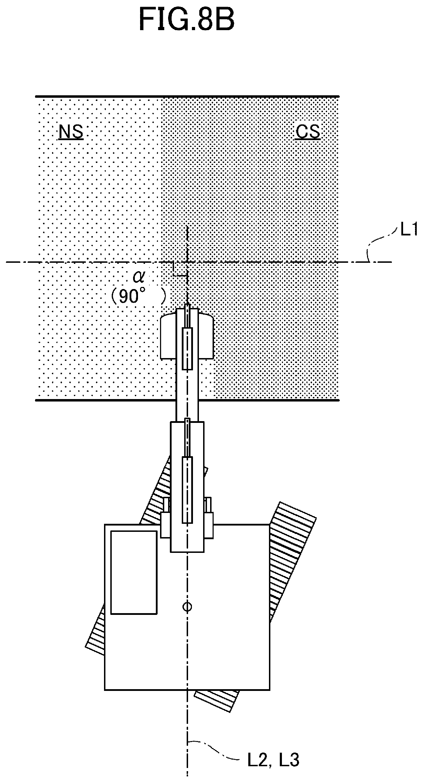

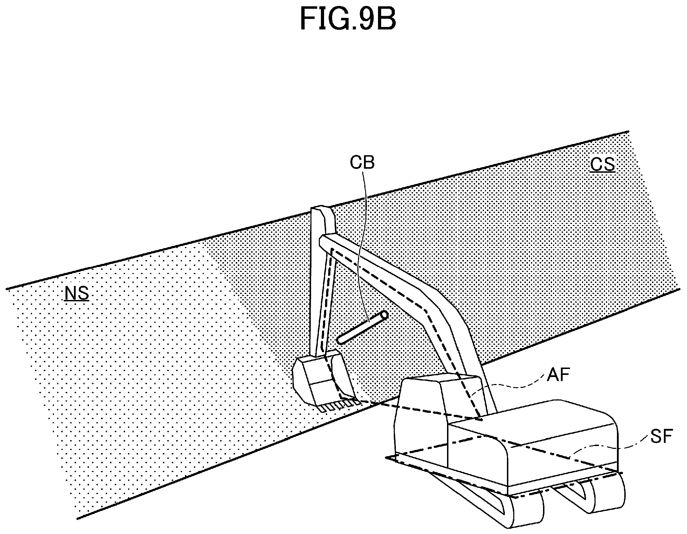

Next, with reference to FIG. 7, FIG. 8A, FIG. 8B, FIG. 9A, and FIG. 9B, an example of a process in which the controller 30 causes the upper swiveling body 3 to face the target construction surface straight (hereinafter referred to as a "straight facing process") will be described. FIG. 7 is a flowchart of the straight facing process. The controller 30 performs the straight facing process when the MC switch is pressed. FIG. 8A and FIG. 8B are each a top view of the shovel 100 upon performing the straight facing process. FIG. 9A and FIG. 9B are each a perspective view of the shovel 100 upon performing the straight facing process when the shovel 100 is viewed from the left back. Specifically, FIG. 8A and FIG. 9A illustrate a state in which the upper swiveling body 3 does not face the target construction surface straight, and FIG. 8B and FIG. 9B illustrate a state in which the upper swiveling body 3 faces the target construction surface straight. In FIG. 8A, FIG. 8B, FIG. 9A, and FIG. 9B, the target construction surface is a backslope BS as illustrated in, for example, FIG. 1. A region NS represents a state in which the backslope BS is not completed, that is, a state in which the ground surface ES does not match the backslope BS as illustrated in FIG. 1, and a region CS represents a state in which the backslope BS is completed, that is, the ground surface ES matches the backslope BS. In FIG. 8A, FIG. 8B, FIG. 9A, and FIG. 9B, for ease of understanding, the region NS is given a rough dot pattern, and the region CS is given a fine dot pattern.

The state in which the upper swiveling body 3 faces the target construction surface straight, includes, for example, a state in which an angle α formed between a line segment L1 representing the direction (extending direction) of the target construction surface and a line segment L2 representing the front-back axis of the upper swiveling body 3 is 90 degrees on a virtual horizontal plane, as illustrated in FIG. 8B. The extending direction of the slope as the direction of the target construction surface, which is represented by the line segment L1, is a direction orthogonal to a slope length direction, for example. The slope length direction is, for example, a direction along a virtual line segment connecting the top (shoulder) and the bottom (foot) of the slope at the shortest distance. A state in which the upper swiveling body 3 faces the target construction surface straight may be defined as a state in which an angle β (see FIG. 8A) formed between the line segment L2 representing the front-back axis of the upper swiveling body 3 and a line segment L3 perpendicular to the direction (extending direction) of the target construction surface is 0 degrees on the virtual horizontal plane. A direction represented by the line segment L3 corresponds to a direction of a horizontal component of a perpendicular line drawn to the target construction surface.

A virtual cylinder CB of FIG. 9A and FIG. 9B represents a portion of the normal to the target construction surface (the backslope BS), a dash-dotted line represents a portion of a virtual swivel plane SF, and a dashed line represents a portion of the virtual attachment operation plane AF. The attachment operation plane AF is arranged to be perpendicular to the swivel plane SF. As illustrated in FIG. 9B, when the upper swiveling body 3 is in a state of facing the target construction surface straight, the attachment operation plane AF is arranged so that the attachment operation plane AF includes the portion of the normal as represented by the virtual cylinder CB, that is, the attachment operation plane AF extends along the portion of the normal.

The automatic control part 54, for example, sets the swiveling angle formed when the attachment operation plane AF and the target construction surface (the backslope BS) are perpendicular to each other, as the target angle. The automatic control part 54 detects the current swiveling angle based on the output of the position measurement device P1 or the like and calculates a difference between the target angle and the current swiveling angle (detected value). The automatic control part 54 operates the swiveling hydraulic motor 2A so that the difference is smaller than or equal to a predetermined value or is zero. Specifically, when the difference between the target angle and the current swiveling angle is smaller than or equal to the predetermined value or is zero, the automatic control part 54 determines that the upper swiveling body 3 faces the target construction surface straight. When the swiveling operation lever is operated while the predetermined switch is pressed, the automatic control part 54 determines whether or not the swiveling operation lever is operated in a direction of causing the upper swiveling body 3 to face the target construction surface straight. For example, when the swiveling operation lever is operated in a direction in which the difference between the target angle and the current swiveling angle increases, the automatic control part 54 determines that the swiveling operation lever is not operated in a direction of causing the upper swiveling body 3 to face the target construction surface straight, and does not perform the straight facing control. When the swiveling operation lever is operated in a direction in which the difference between the target angle and the current swiveling angle decreases, the automatic control part 54 determines that the swiveling operation lever is operated in a direction of causing the upper swiveling body 3 to face the target construction surface straight, and performs the straight facing control. As a result, the swiveling hydraulic motor 2A can be operated so that the difference between the target angle and the current swiveling angle decreases. Subsequently, the automatic control part 54 stops the swiveling hydraulic motor 2A when the difference between the target angle and the current swiveling angle is smaller than or equal to the predetermined value or is zero.

The example illustrated in FIG. 8B is an example indicating a state in which the attachment operation plane AF includes the normal (the virtual cylinder CB), and the angle α formed between the line segment L1 representing the direction of the target construction surface and the line segment L2 representing the front-back axis of the upper swiveling body 3 is 90 degrees. However, as long as the attachment operation plane AF is in a state of including the normal (the virtual cylinder CB), the angle α is not necessarily required to be 90 degrees. For example, since the shovel 100 is often installed on a ground with large relief, even if the attachment operation plane AF is in the state of including the normal (the virtual cylinder CB), the angle α is not necessarily 90 degrees.

Based on the above description of FIG. 8A, FIG. 8B, FIG. 9A, and FIG. 9B, a flow of the straight facing control will be described with reference to FIG. 7 again. First, the machine control device 50 included in the controller 30 determines whether or not a shift from facing straight has occurred (step ST1). In the present embodiment, the machine control device 50 determines whether or not a shift from facing straight has occurred based on the information related to the target construction surface previously stored in the storage device 47 and the output of the position measurement device P1 as the direction detecting device. The information related to the target construction surface includes information related to the direction of the target construction surface. The position measurement device P1 outputs information related to the direction of the upper swiveling body 3. For example, as illustrated in FIG. 9A, in a state in which the attachment operation plane AF does not include the normal to the target construction surface, the machine control device 50 determines that a shift from facing the target construction surface straight from the shovel 100 has occurred. In such a state, as illustrated in FIG. 8A, the angle α formed between the line segment L1 representing the direction of the target construction surface and the line segment L2 representing the direction of the upper swiveling body 3 is an angle other than 90 degrees.

Note that, the machine control device 50 may determine whether or not a shift from facing straight has occurred based on an image taken by the camera S6. For example, the machine control device 50 may, by performing various image processing on the image taken by the camera S6 to derive information related to the shape of the slope to be worked on, determine whether or not a shift from facing straight has occurred based on the derived information. Alternatively, the machine control device 50 may determine whether or not a shift from facing straight has occurred based on an output of a space recognition device other than the camera S6, such as an ultrasonic sensor, a millimeter wave radar, a distance image sensor, a LIDAR sensor, or an infrared sensor.

When it is determined that a shift from facing straight has not occurred (NO in step ST1), the machine control device 50 terminates the current straight facing process without performing the straight facing control.

When it is determined that a shift from facing straight has occurred (YES in step ST1), the machine control device 50 determines whether or not no obstacle is present around the shovel 100 (in step ST2). In the present embodiment, the machine control device 50 performs image recognition processing on the image taken by the camera S6 to determine whether or not an image related to a predetermined obstacle exists in the taken image. The predetermined obstacle is, for example, a person, an animal, a machine, a building, or any combination thereof. Then, when it is determined that no image related to the predetermined obstacle exists in an image related to a predetermined area that is set around the shovel 100, it is determined that no obstacle is present around the shovel 100. The predetermined area includes, for example, an area in which there can be an object that comes into contact with the shovel 100 when the shovel 100 is moved to cause the upper swiveling body 3 to face the target construction surface straight. An area RA, which is represented by a cross hatching pattern in FIG. 8A, is an example of the predetermined area. However, the predetermined area may be set as a wider area, such as an area within a predetermined distance from a swiveling axis 2X.

The machine control device 50 may determine whether or not no obstacle is present around the shovel 100 based on an output of a space recognition device other than the camera S6, such as an ultrasonic sensor, a millimeter wave radar, a distance image sensor, a LIDAR sensor, or an infrared sensor.

When it is determined that an obstacle is present around the shovel 100 (NO in step ST2), the machine control device 50 terminates the current straight facing process without performing the straight facing control. This is to prevent the shovel 100 from contacting the obstacle by performing the straight facing control. In this case, the machine control device 50 may output an alarm. The machine control device 50 may send information related to the obstacle, such as the presence or absence of the obstacle, the location of the obstacle, and the type of the obstacle, to the external device through the communication device T1. The machine control device 50 may receive information related to the obstacle obtained by another shovel through the communication device T1.

When it is determined that no obstacle is present around the shovel 100 (YES in step ST2), the machine control device 50 performs the straight facing control (in step ST3). In the examples of FIG. 8A, FIG. 8B, FIG. 9A, and FIG. 9B, the automatic control part 54 of the machine control device 50 outputs an electric current command to the proportional valve 31CL (see FIG. 4C). The pilot pressure generated by the hydraulic oil passing through the proportional valve 31CL and the shuttle valve CL from the pilot pump 15 is applied to the left pilot port of the control valve 173. The control valve 173 receiving the pilot pressure at the left pilot port is displaced in the right direction to cause the hydraulic oil discharged by the left main pump 14L to flow into a first port 2A1 of the swiveling hydraulic motor 2A. The control valve 173 causes the hydraulic oil that flows out from a second port 2A2 of the swiveling hydraulic motor 2A to flow out to the hydraulic oil tank. As a result, the swiveling hydraulic motor 2A rotates in a forward direction and swivels the upper swiveling body 3 in the left direction about the swiveling axis 2X as indicated by the arrow in FIG. 8A. Subsequently, as illustrated in FIG. 8B, the automatic control part 54 stops the output of the electric current command to the proportional valve 31CL at 90 degrees of the angle α or at 0 degrees of the angle β and reduces the pilot pressure applied to the left pilot port of the control valve 173. The control valve 173 is displaced in the left direction to return to a neutral position, and blocks the flow of the hydraulic oil from the left main pump 14L toward the first port 2A1 of the swiveling hydraulic motor 2A. Also, the control valve 173 blocks the flow of the hydraulic oil from the second port 2A2 of the swiveling hydraulic motor 2A toward the hydraulic oil tank. As a result, the swiveling hydraulic motor 2A stops the rotation in the forward direction and stops swiveling the upper swiveling body 3 in the left direction.

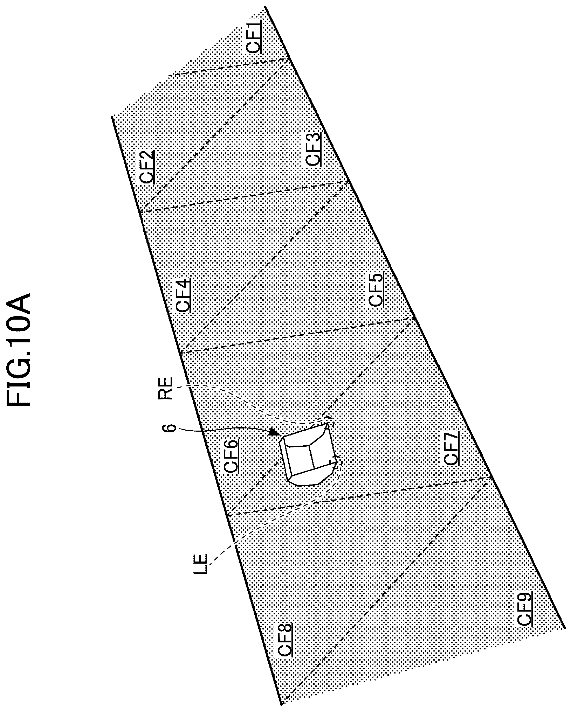

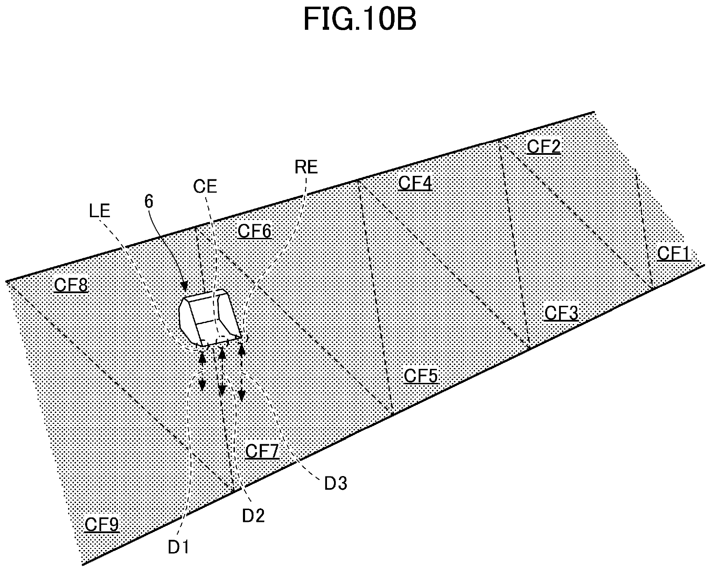

Next, with reference to FIG. 10A and FIG. 10B, a process in which the machine control device 50 selects the straight facing target surface (straight facing target surface selection process) will be described. FIG. 10A and FIG. 10B are each a perspective view of the target construction surface upon performing the straight facing target surface selection process. In the examples as illustrated in FIG. 10A and FIG. 10B, the target construction surface is formed of a plurality of constituting surfaces including a first constituting surface CF1 to a ninth constituting surface CF9. Also, in FIG. 10A and FIG. 10B, for ease of understanding, the first constituting surface CF1 to the ninth constituting surface CF9 are on the same flat plane.

The straight facing target surface is a surface that the operator of the shovel 100 intends to cause the upper swiveling body 3 to face straight, and is one of the plurality of constituting surfaces that constitute the target construction surface.

The target construction surface is a surface representing the terrain of a working site, and is typically a virtual plane representing the terrain of the working site after completion of construction. Typically, the target construction surface is represented by a model that is defined by a plurality of coordinate points. In the examples as illustrated in FIG. 10A and FIG. 10B, the target construction surface is generated as a three-dimensional polygon mesh using Delaunay triangulation. Information related to the target construction surface may be stored in, for example, the storage device 47 in advance, or may be dynamically obtained via, for example, the communication device T1. Also, the target construction surface may be set by the operator of the shovel 100 or may be set by a construction manager or the like.

The operator of the shovel 100 can select a desired constituting surface as the straight facing target surface by operating the swiveling operation lever while pressing the MC switch. The operator may operate the swiveling operation lever after pressing the MC switch in order to select the desired constituting surface as the straight facing target surface. Alternatively, the operator may press the MC switch after starting operating the swiveling operation lever in order to select the desired constituting surface as the straight facing target surface.

When it is detected that the swiveling operation lever is operated and the MC switch is pressed, the machine control device 50 selects, as the straight facing target surface, the constituting surface that is directly below the bucket 6 at that time. The content of the operation of the swiveling operation lever is, for example, detected based on an output of the operation sensor 29. The MC switch is the switch SW1 that is a push-button switch provided at the end of the left operation lever 26L. Note that, when the pressing of the MC switch is detected regardless of whether or not the swiveling operation lever is operated, the machine control device 50 may select, as the straight facing target surface, the constituting surface that is directly below the bucket 6 at that time.

In the example as illustrated in FIG. 10A, both a left end LE and a right end RE of the toe of the bucket 6 are positioned directly above a seventh constituting surface CF7. Therefore, when it is detected that the swiveling operation lever is operated and the MC switch is pressed, the machine control device 50 selects, as the straight facing target surface, the seventh constituting surface CF7 that is directly below the bucket 6.

In the example as illustrated in FIG. 10B, the left end LE of the toe of the bucket 6 is positioned directly above an eighth constituting surface CF8, and a center CE and the right end RE of the toe of the bucket 6 are positioned directly above the seventh constituting surface CF7. A vertical distance between the left end LE of the toe of the bucket 6 and the target construction surface (the eighth constituting surface CF8) is a distance D1, a vertical distance between the center CE of the toe of the bucket 6 and the target construction surface (the seventh constituting surface CF7) is a distance D2 that is longer than the distance D1, and a vertical distance between the right end RE of the toe of the bucket 6 and the target construction surface (the seventh constituting surface CF7) is a distance D3 that is longer than the distance D2.

In this case, the machine control device 50 may be configured to select, as the straight facing target surface, a constituting surface whose vertical distance to the bucket 6 is the shortest, of the plurality of constituting surfaces that are directly below the bucket 6. That is, the machine control device 50 may select, as the straight facing target surface, the eighth constituting surface CF8 whose vertical distance to the bucket 6 is the shortest, of the seventh constituting surface CF7 and the eighth constituting surface CF8 that are directly below the bucket 6.

Alternatively, the machine control device 50 may be configured to select, as the straight facing target surface, a constituting surface crossing a perpendicular line drawn from a predetermined part of the bucket 6, of the plurality of constituting surfaces that constitute the target construction surface. The predetermined part is, for example, the center CE of the toe of the bucket 6. In this case, even if the distance D1 is shorter than the distance D2, the machine control device 50 selects, as the straight facing target surface, the seventh constituting surface CF7 that is the constituting surface crossing the perpendicular line drawn from the center CE of the toe of the bucket 6. Note that, the predetermined part may be the center of the bottom surface of the bucket 6, or may be the center of the back surface of the bucket 6.

Alternatively, when the leftward swiveling operation is performed and the MC switch is operated, the machine control device 50 may select, as the straight facing target surface, a constituting surface crossing a perpendicular line drawn from the left end LE of the bucket 6, of the plurality of constituting surfaces that constitute the target construction surface. Also, when the rightward swiveling operation is performed and the MC switch is operated, the machine control device 50 may select, as the straight facing target surface, a constituting surface crossing a perpendicular line drawn from the right end RE of the bucket 6, of the plurality of constituting surfaces that constitute the target construction surface. In this case, when the state as illustrated in FIG. 10B is achieved by the leftward swiveling operation, the machine control device 50 selects, as the straight facing target surface, the eighth constituting surface CF8 that is directly below the left end LE of the bucket 6, and when the state as illustrated in FIG. 10B is achieved by the rightward swiveling operation, the machine control device 50 selects, as the straight facing target surface, the seventh constituting surface CF7 that is directly below the right end RE of the bucket 6.

By selecting the straight facing target surface, the machine control device 50 can then determine the target angle for causing the upper swiveling body 3 to face the selected straight facing target surface straight. The target angle is, for example, an angle formed between the current front-back axis of the upper swiveling body 3, and a front-back axis of the upper swiveling body 3 when the upper swiveling body 3 faces the straight facing target surface straight. Therefore, after the straight facing target surface is selected, the machine control device 50 can cause the upper swiveling body 3 to face the straight facing target surface straight by automatically operating and automatically stopping the swiveling hydraulic motor 2A. Note that, in the examples as illustrated in FIG. 10A and FIG. 10B, the target angle is the same regardless of which of the seventh constituting surface CF7 or the eighth constituting surface CF8 is selected as the straight facing target surface. This is because the seventh constituting surface CF7 and the eighth constituting surface CF8 are located on the same flat plane. After the upper swiveling body 3 has faced the straight facing target surface straight, the controller 30 generates a target track on the straight facing target surface. In response to input of an operation of the arm operation lever performed by the operator, the controller 30 controls the attachments so that the toe of the bucket 6 follows the generated target track.

The machine control device 50 may be configured, after selecting the straight facing target surface, to inform the operator of which of the plurality of constituting surfaces has been selected as the straight facing target surface. Specifically, the machine control device 50 may be configured to inform the operator of which constituting surface has been selected as the straight facing target surface via, for example, the display device 45 or the sound output device 43.

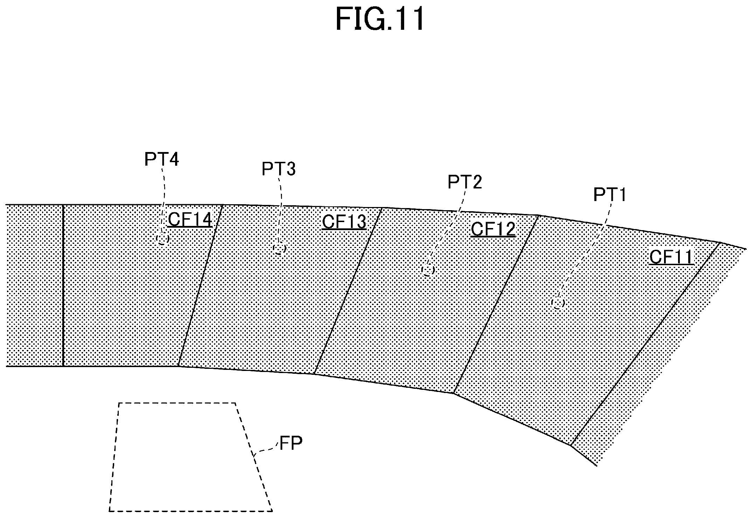

Next, with reference to FIG. 11, a process in which the machine control device 50 selects the straight facing target surface (straight facing target surface selection process) will be described. FIG. 11 is a perspective view of the target construction surface upon performing the straight facing target surface selection process. In the example as illustrated in FIG. 11, the target construction surface is formed of a plurality of constituting surfaces including an eleventh constituting surface CF11 to a fourteenth constituting surface CF14. A region FP enclosed by a dashed line in FIG. 11 represents the position of the lower traveling body 1**.** By swiveling the upper swiveling body 3 when the lower traveling body 1 is positioned in the region FP, the shovel 100 can cause the upper swiveling body 3 to face straight each of the eleventh constituting surface CF11 to the fourteenth constituting surface CF14. That is, without performing the traveling operation, the operator of the shovel 100 can cause the upper swiveling body 3 to face straight each of the four constituting surfaces (the eleventh constituting surface CF11 to the fourteenth constituting surface CF14) by simply performing the swiveling operation on the spot.

Four dashed-line circles in FIG. 11 each indicate the position of the center of the toe of the bucket 6. The machine control device 50 selects the eleventh constituting surface CF11 as the straight facing target surface when the center of the toe of the bucket 6 is at a position indicated by a dashed-line circle PT1 after the operator of the shovel 100 has performed the swiveling operation while pressing the MC switch. Also, the machine control device 50 selects a twelfth constituting surface CF12 as the straight facing target surface when the center of the toe of the bucket 6 is at a position indicated by a dashed-line circle PT2. The machine control device 50 selects a thirteenth constituting surface CF13 as the straight facing target surface when the center of the toe of the bucket 6 is at a position indicated by a dashed-line circle PT3. The machine control device 50 selects the fourteenth constituting surface CF14 as the straight facing target surface when the center of the toe of the bucket 6 is at a position indicated by a dashed-line circle PT4.

When the operator of the shovel 100 intends to cause the upper swiveling body 3 to face the eleventh constituting surface CF11 straight, the operator of the shovel 100 just needs to move the bucket 6 directly above the eleventh constituting surface CF11 and press the MC switch. The same applies to when the operator of the shovel 100 intends to cause the upper swiveling body 3 to face straight the twelfth constituting surface CF12, the thirteenth constituting surface CF13, or the fourteenth constituting surface CF14.

In the example as illustrated in FIG. 11, when there is a need to swivel the upper swiveling body 3 leftward in order to cause the upper swiveling body 3 to face the straight facing target surface straight, the machine control device 50 automatically swivels the upper swiveling body 3 leftward even if the swiveling operation lever is operated in the rightward swiveling direction. However, even if there is a need to swivel the upper swiveling body 3 leftward in order to cause the upper swiveling body 3 to face the straight facing target surface straight, the machine control device 50 may be configured not to swivel the upper swiveling body 3 leftward when the swiveling operation lever is operated in the rightward swiveling direction. In this case, the machine control device 50 may automatically stop rightward swiveling of the upper swiveling body 3 in response to the operation of the swiveling operation lever in the rightward swiveling direction. Subsequently, when the swiveling operation lever is operated in the leftward swiveling direction, the machine control device 50 may swivel the upper swiveling body 3 leftward by the target angle. The same applies to when there is a need to swivel the upper swiveling body 3 rightward in order to cause the upper swiveling body 3 to face the straight facing target surface straight.

In this way, the shovel 100 according to the embodiment of the present disclosure includes: the lower traveling body 1; the upper swiveling body 3 mounted to the lower traveling body 1; the attachments (excavating attachments) including the boom 4 attached to the upper swiveling body 3, the arm 5 attached to the end of the boom 4, and the bucket 6, which is the end attachment, attached to the end of the arm 5; and the machine control device 50, which is the control device, configured to select, as the straight facing target surface, one of the plurality of constituting surfaces that constitute the target construction surface based on the position of the bucket 6.

This configuration produces the effect of further simplifying the operations performed by the operator of the shovel 100 when the operator of the shovel 100 causes the shovel 100 to face the straight facing target surface straight. For example, by simply operating the swiveling operation lever while pressing the MC switch when the bucket 6 is positioned directly above a desired slope surface (the slope surface corresponding to the constituting surface that constitutes the target construction surface), the operator of the shovel 100 can cause the upper swiveling body 3 to face the constituting surface corresponding to that slope surface (the constituting surface selected as the straight facing target surface).

In the above, preferable embodiments of the present invention have been described in detail. However, the present invention is not limited to the above-described embodiments or the below-described embodiments. Various modifications, substitutions, or the like can be applied in the above-described or below-described embodiments without departing from the scope of the present invention. In addition, the features that have been separately described can be combined together unless there occurs any technical contradiction.

For example, in the above-described embodiments, the shovel 100 may be a remote-operated shovel. In this case, an operator in a remote operation room communicates information between the shovel 100 and the remote operation room through the communication device T1 mounted in the shovel 100. Therefore, the operator can move the shovel 100 by operating the operation device 26 disposed in the remote operation room. In this case, the machine control device 50 may be mounted to a device disposed in the remote operation room.

### [Description of the Reference Numeral]

1 ··· lower traveling body 2 ··· swiveling mechanism 2A ··· swiveling hydraulic motor 2M ··· traveling hydraulic motor 2ML ··· left traveling hydraulic motor 2MR ··· right traveling hydraulic motor 3 ··· upper swiveling body 4 ··· boom 5 ··· arm 6 ··· bucket 7 ··· boom cylinder 8 ··· arm cylinder 9 ··· bucket cylinder 10 ··· cab 11 ··· engine 13 ··· regulator 13L ··· left regulator 13R ··· right regulator 14 ··· main pump 14L ··· left main pump 14R ··· right main pump 15 ··· pilot pump 17 ··· control valve unit 18 ··· restrictor 18L ··· left restrictor 18R ··· right restrictor 19 ··· control valve sensor 19L ··· left control pressure sensor 19R ··· right control pressure sensor 26 ··· operation device 28, 28L, 28R ··· discharge pressure sensor 29 ··· operation sensor 30 ··· controller 31, 31AL, 31AR, 31BL, 31BR, 31CL, 31CR ··· proportional valve 43 ··· sound output device 45 ··· display device 46 ··· input device 47 ··· storage device 50 ··· machine control device 51 ··· position calculating part 52 ··· distance calculating part 53 ··· information communication part 54 ··· automatic control part 100 ··· shove 171 to 174, 175L, 175R, 176L, 176R ··· control valve CE ··· center CF1 ··· first constituting surface CF2 ··· second constituting surface CF3 ··· third constituting surface CF4 ··· fourth constituting surface CF5 ··· fifth constituting surface CF6 ··· sixth constituting surface CF7 ··· seventh constituting surface CF8 ··· eighth constituting surface CF9 ··· ninth constituting surface CF11 ··· eleventh constituting surface CF12 ··· twelfth constituting surface CF13 ··· thirteenth constituting surface CF14 ··· fourteenth constituting surface LE ··· left end RE ··· right end S1 ··· boom angle sensor S2 ··· arm angle sensor S3 ··· bucket angle sensor S4 ··· machine body tilt sensor S5 ··· swivel angular velocity sensor S6 ··· camera S6B ··· back camera S6F ··· front camera S6L ··· left camera S6R ··· right camera P1 ··· position measurement device T1 ··· communication device

## Claims

1. A shovel (100), comprising:
a lower traveling body (1);
an upper swiveling body (3) mounted to the lower traveling body (1);
an attachment including a boom (4) attached to the upper swiveling body (3), an arm (5) attached to an end of the boom (4), and an end attachment (6) attached to an end of the arm (5); and
a control device configured to select from a plurality of constituting surfaces that constitute a target construction surface, a straight facing target surface faced by the upper swiveling body (3) such that a virtual plane (AF) that crosses the attachment in a longitudinal direction and is positioned perpendicular to a swiveling plane includes a normal to the target construction surface, based on a position of the end attachment (6).

2. The shovel (100) according to claim 1, wherein the control device selects, as the straight facing target surface, a constituting surface that is directly below the end attachment (6) from the plurality of constituting surfaces.

3. The shovel (100) according to claim 1, wherein when two or more of the plurality of constituting surfaces are directly below the end attachment (6), the control device selects, as the straight facing target surface, a constituting surface whose vertical distance to the end attachment (6) is shortest from the two or more of the plurality of constituting surfaces.

4. The shovel (100) according to claim 1, wherein the control device selects, as the straight facing target surface, a constituting surface crossing a vertical line drawn from a predetermined part of the end attachment (6) from the plurality of constituting surfaces.

5. The shovel (100) according to claim 4, wherein
upon leftward swiveling, a constituting surface crossing the vertical line drawn from a left end of the end attachment (6) is selected as the straight facing target surface from the plurality of constituting surfaces, and
upon rightward swiveling, a constituting surface crossing the vertical line drawn from a right end of the end attachment (6) is selected as the straight facing target surface from the plurality of constituting surfaces.

6. A control device for a shovel that includes a lower traveling body (1), an upper swiveling body (3) mounted to the lower traveling body (1), and an attachment including a boom (4) attached to the upper swiveling body (3), an arm (5) attached to an end of the boom (4), and an end attachment (6) attached to an end of the arm (5), wherein
the control device is configured to select from a plurality of constituting surfaces that constitute a target construction surface, a straight facing target surface faced by the upper swiveling body (3) such that a virtual plane (AF) that crosses the attachment in a longitudinal direction and is positioned perpendicular to a swiveling plane includes a normal to the target construction surface, based on a position of the end attachment (6).

7. The shovel (100) according to claim 1, wherein a distance between the end attachment (6) and the target construction surface is calculated based on information obtained from a boom angle sensor (S1), an arm angle sensor (S2), a bucket angle sensor (S3), a machine body tilt sensor (S4), a swivel angular velocity sensor (S5), a space recognition device (S6), a position measurement device (P1), a communication device (T1), an input device (46), or any combination thereof.

8. The shovel (100) according to claim 1, wherein the upper swiveling body (3) is caused to face the target construction surface straight by starting controlling to automatically cause the upper swiveling body (3) to face the target construction surface straight or automatically reducing a swiveling speed of the upper swiveling body (3) to stop the upper swiveling body (3), in response to a predetermined operation performed.

9. The shovel (100) according to claim 8, wherein the predetermined operation is an operation of a swiveling operation lever with a predetermined switch being pressed.

## Patentansprüche

1. Bagger (100), umfassend:
einen unteren Fahrkörper (1);
einen oberen Schwenkkörper (3), der an dem unteren Fahrkörper (1) montiert ist;
ein Ansatzstück, umfassend einen Ausleger (4), der an dem oberen Schwenkkörper (3) angebracht ist, einen Arm (5), der an einem Ende des Auslegers (4) angebracht ist, und ein Endansatzstück (6), das an einem Ende des Arms (5) angebracht ist; und
eine Steuervorrichtung, die konfiguriert ist, aus mehreren konstituierenden Flächen, die eine Zielkonstruktionsfläche konstituieren, eine gerade zugewandte Zielfläche,die dem oberen Schwenkkörper (3) zugewandt ist, auszuwählen, sodass eine virtuelle Ebene (AF), die das Ansatzstück in einer Längsrichtung schneidet und senkrecht zu einer Schwenkebene positioniert ist, eine Normale zu der Zielkonstruktionsfläche, basierend auf einer Position des Endansatzstücks (6), enthält.

2. Bagger (100) nach Anspruch 1, wobei die Steuervorrichtung als die gerade zugewandte Zielfläche eine konstituierende Fläche auswählt, die sich direkt unterhalb des Endansatzstücks (6) von mehreren konstituierenden Flächen befindet.

3. Bagger (100) nach Anspruch 1, wobei, wenn zwei oder mehr der mehreren konstituierenden Flächen direkt unterhalb des Endansatzstücks (6) sind, die Steuervorrichtung als die gerade zugewandte Zielfläche eine konstituierende Fläche auswählt, deren vertikaler Abstand zu dem Endansatzstück (6) von den zwei oder mehr der mehreren konstituierenden Flächen am kürzesten ist.

4. Bagger (100) nach Anspruch 1, wobei die Steuervorrichtung als die gerade zugewandte Zielfläche eine konstituierende Fläche, die eine vertikale Linie schneidet, die von einem vorbestimmten Teil des Endansatzstücks (6) gezogen wird, aus den mehreren konstituierenden Flächen auswählt.

5. Bagger (100) nach Anspruch 4, wobei
beim Schwenken nach links eine konstituierende Fläche, die die von einem linken Ende des Endansatzstücks (6) gezogene vertikale Linie schneidet, als die gerade zugewandte Zielfläche aus den mehreren konstituierenden Flächen ausgewählt wird, und
beim Schwenken nach rechts eine konstituierende Fläche, die die von einem rechten Ende des Endansatzstückes (6) gezogene vertikale Linie schneidet, als die gerade zugewandte Zielfläche aus den mehreren konstituierenden Flächen ausgewählt wird.

6. Steuergerät für einen Bagger, der einen unteren Fahrkörper (1), einen oberen Schwenkkörper (3), der an dem unteren Fahrkörper (1) montiert ist, und ein Ansatzstück, das einen Ausleger (4), der an dem oberen Schwenkkörper (3) angebracht ist, einen Arm (5), der an einem Ende des Auslegers (4) angebracht ist, und ein Endansatzstück (6), das an einem Ende des Arms (5) angebracht ist, umfasst, wobei
die Steuervorrichtung konfiguriert ist, aus mehreren konstituierenden Oberflächen, die eine Zielkonstruktionsfläche konstituieren, eine gerade zugewandte Zielfläche, die dem oberen Schwenkkörper (3) zugewandt ist, auszuwählen, sodass eine virtuelle Ebene (AF), die das Ansatzstück in einer Längsrichtung schneidet und senkrecht zu einer Schwenkebene positioniert ist, eine Normale zu der Zielkonstruktionsfläche, basierend auf einer Position des Endansatzstücks (6), enthält.

7. Bagger (100) nach Anspruch 1, wobei ein Abstand zwischen dem Endansatzstück (6) und der Zielkonstruktionsfläche auf der Grundlage von Informationen berechnet wird, die von einem Auslegerwinkelsensor (S1), einem Armwinkelsensor (S2), einem Schaufelwinkelsensor (S3), einem Maschinenkörperneigungssensor (S4), einem Schwenkwinkelgeschwindigkeitssensor (S5), einer Raumerkennungsvorrichtung (S6), einer Positionsmessvorrichtung (P1), einer Kommunikationsvorrichtung (T1), einer Eingabevorrichtung (46) oder beliebiger Kombination davon erhalten werden.

8. Bagger (100) nach Anspruch 1, wobei der obere Schwenkkörper (3) veranlasst wird, gerade der Zielkonstruktionsfläche zugewandt zu sein, indem Steuerung gestartet wird, um den oberen Schwenkkörper (3) automatisch zu veranlassen, gerade der Zielkonstruktionsfläche zugewandt zu sein oder eine Schwenkgeschwindigkeit des oberen Schwenkkörpers (3) automatisch zu verringern, um den oberen Schwenkkörper (3), als Reaktion auf eine vorbestimmte Bedienung, die durchgeführt wird, zu stoppen.

9. Bagger (100) nach Anspruch 8, wobei die vorbestimmte Bedienung eine Bedienung eines Schwenkbedienhebels ist, bei dem ein vorbestimmter Schalter gedrückt wird.

## Revendications

1. Une pelleteuse (100), comprenant :
un corps mobile inférieur (1) ;
un corps pivotant supérieur (3) monté sur le corps mobile inférieur (1) ;
un accessoire incluant une flèche (4) fixé au corps pivotant supérieur (3), un bras (5) fixé à une extrémité de la flèche (4) et un accessoire d'extrémité (6) fixé à une extrémité du bras (5) ; et
un dispositif de commande configuré pour sélectionner parmi une pluralité de surfaces constituantes qui constituent une surface de construction cible, une surface cible orientée de manière rectiligne en face du corps pivotant supérieur (3) de telle sorte qu'un plan virtuel (AF) qui croise l'accessoire dans une direction longitudinale et est positionné perpendiculairement à un plan pivotant inclut une normale à la surface de construction cible, sur la base d'une position de l'accessoire d'extrémité (6).

2. La pelleteuse (100) selon la revendication 1, dans laquelle le dispositif de commande sélectionne, en tant que surface cible orientée de manière rectiligne, une surface constituante qui est directement en dessous de l'accessoire d'extrémité (6) parmi la pluralité de surfaces constituantes.

3. La pelleteuse (100) selon la revendication 1, dans laquelle lorsque deux ou plus de la pluralité de surfaces constituantes sont directement en dessous de l'accessoire d'extrémité (6), le dispositif de commande sélectionne, en tant que surface cible orientée de manière rectiligne, une surface constituante dont la distance jusqu'à l'accessoire d'extrémité (6) est la plus courte parmi les 2 ou plus de la pluralité de surfaces constituantes.

4. La pelleteuse (100) selon la revendication 1, dans laquelle le dispositif de commande sélectionne, en tant que surface cible orientée de manière rectiligne, une surface constituante croisant une ligne verticale tracée à partir d'une partie prédéterminée de l'accessoire d'extrémité (6) parmi la pluralité de surfaces constituantes.

5. La pelleteuse (100) selon la revendication 4, dans laquelle
lors d'un pivotement vers la gauche, une surface constituante croisant la ligne verticale tracée à partir d'une extrémité gauche de l'accessoire d'extrémité (6) est sélectionnée en tant que surface cible orientée de manière rectiligne parmi la pluralité de surfaces constituantes, et
lors d'un pivotement vers la droite, une surface constituante croisant la ligne verticale tracée à partir d'une extrémité droite de l'accessoire d'extrémité (6) est sélectionnée en tant que surface cible orientée de manière rectiligne parmi la pluralité de surfaces constituantes.

6. Un dispositif de commande pour une pelleteuse qui inclut un corps mobile inférieur (1), un corps pivotant supérieur (3) monté sur le corps mobile inférieur (1) et un accessoire incluant une flèche (4) fixé au corps pivotant supérieur (3), un bras (5) fixé à une extrémité de la flèche (4) et un accessoire d'extrémité (6) fixé à une extrémité du bras (5), dans lequel
le dispositif de commande est configuré pour sélectionner parmi une pluralité de surfaces constituantes qui constituent une surface de construction cible, une surface cible orientée de manière rectiligne en face du corps pivotant supérieur (3) de telle sorte qu'un plan virtuel (AF) qui croise l'accessoire dans une direction longitudinale et est positionné perpendiculairement à un plan pivotant inclut une normale à la surface de construction cible, sur la base d'une position de l'accessoire d'extrémité (6).

7. La pelleteuse (100) selon la revendication 1, dans laquelle une distance entre l'accessoire d'extrémité (6) et la surface de construction cible est calculée sur la base d'informations obtenues à partir d'un capteur d'angle de flèche (S1), d'un capteur d'angle de bras (S2), d'un capteur d'angle de godet (S3), d'un capteur d'inclinaison de corps de machine (S4), d'un capteur de vitesse angulaire de pivotement (S5), un dispositif de reconnaissance spatiale (S6), un dispositif de mesure de position (P1), un dispositif de communication (T1), un dispositif d'entrée (46), ou toute combinaison de ceux-ci.

8. La pelleteuse (100) selon la revendication 1, dans laquelle le corps pivotant supérieur (3) est amené à faire face de manière rectiligne à la surface de construction cible en démarrant la commande qui amène automatiquement le corps pivotant supérieur (3) à faire face de manière rectiligne à la surface de construction cible ou en réduisant automatiquement une vitesse de pivotement du corps pivotant supérieur (3) pour arrêter le corps pivotant supérieur (3), en réponse à une opération prédéterminée réalisée.

9. La pelleteuse (100) selon la revendication 8, dans laquelle l'opération prédéterminée est une opération d'un levier d'opération de pivotement avec enfoncement d'un bouton prédéterminé.
